# EUROPEAN PATENT SPECIFICATION

(11) **EP 3 783 847 B1**
(45) Date of publication and mention of the grant of the patent: **25.10.2023**
(21) Application number: 20796230.9
(22) Date of filing: 22.04.2020
(51) Int. Cl.: H04L 12/66

(54) **VEHICLE-MOUNTED GATEWAY COMMUNICATION METHOD, VEHICLE-MOUNTED GATEWAY, AND SMART VEHICLE**
KOMMUNIKATIONSVERFAHREN FÜR FAHRZEUGMONTIERTES GATEWAY, FAHRZEUGMONTIERTES GATEWAY UND INTELLIGENTES FAHRZEUG
PROCÉDÉ DE COMMUNICATION DE PASSERELLE EMBARQUÉE, PASSERELLE EMBARQUÉE, ET VÉHICULE INTELLIGENT

(30) Priority: 23.04.2019 CN 201910328524
(43) Date of publication of application: 24.02.2021
(73) Proprietor: HUAWEI TECHNOLOGIES CO., LTD., Shenzhen, Guangdong 518129 (CN)
(72) Inventor: LIN, Hsiao-Ying, Shenzhen, Guangdong 518129 (CN); ZHANG, Mingming, Shenzhen, Guangdong 518129 (CN); CHU, Cheng Kang, Shenzhen, Guangdong 518129 (CN)
(74) Representative: Gill Jennings & Every LLP
(86) International application number: PCT/CN2020/086058
(87) International publication number: WO 2020/216235

(56) References cited:
- CN-A- 104 125 152
- CN-A- 104 331 292
- CN-A- 107 105 060
- CN-A- 108 632 079
- JP-B2- S62 779
- US-A1- 2017 072 876
- US-A1- 2018 076 970
- US-A1- 2018 278 616

## Description

This application claims priority to Chinese Patent Application No. 2019103285246, filed with the Chinese Patent Office on April 23, 2019 and entitled "IN-VEHICLE GATEWAY COMMUNICATION METHOD, IN-VEHICLE GATEWAY, AND INTELLIGENT VEHICLE".

### TECHNICAL FIELD

This application relates to the field of communications technologies, and in particular, to an in-vehicle gateway communication method, an in-vehicle gateway, and an intelligent vehicle.

### BACKGROUND

A controller area network (controller area network, CAN) protocol is a serial communication protocol included in the ISO international standardization, and is widely applied to the field of automotive technologies, to implement communication between in-vehicle devices inside a vehicle. All in-vehicle devices in the vehicle are connected to a CAN bus to form an in-vehicle network of the vehicle, and communication data is received and sent between the in-vehicle devices based on the CAN protocol by using the CAN bus.

In the prior art, with continuous development of communications technologies and automotive technologies, an increasing quantity of in-vehicle devices provide a function of connecting to the internet, so that the vehicle obtains more applications such as navigation and remote system upgrade from the internet. However, because the in-vehicle device that can be connected to the internet supports an Ethernet protocol, a gateway used for communication protocol conversion needs to be disposed in the vehicle. Therefore, after communication data of the in-vehicle device that supports the Ethernet protocol is converted into communication data of the in-vehicle device that supports a CAN protocol through the gateway, the converted communication data of the CAN protocol is sent to the CAN bus. Alternatively, after communication data of a CAN protocol is converted, through the gateway, into communication data of the in-vehicle device that supports the Ethernet protocol, the converted communication data of the Ethernet protocol is sent to the in-vehicle device that supports the Ethernet protocol.

However, for an existing vehicle, malicious data from the internet may enter a CAN bus through an in-vehicle device that can be connected to the internet. This brings a security threat to an in-vehicle network of a vehicle, and causes relatively poor security performance of the in-vehicle network.

US 2018/278616 A1 discloses an in-vehicle communication system, communication management device, and vehicle control device.

US 2018/076970 A1 discloses a communication method based on automotive safety integrity level in vehicle network and an apparatus for the same.

US 2017/072876 A1 discloses hardware-accelerated protocol conversion in an automotive gateway controller.

CN 107 105 060 A discloses a method for realizing information security of an electric vehicle.

### SUMMARY

This application provides an in-vehicle device gateway communication method, an in-vehicle device gateway, and an intelligent vehicle, to improve security performance of an in-vehicle device network.

According to a first aspect, an in-vehicle device gateway communication method is provided. The method includes:
receiving a first message from a first in-vehicle device, where the first message meets a first communications protocol supported by the first in-vehicle device, is used to indicate a second in-vehicle device to perform a target operation, and includes identification information;
identifying the identification information in the first message;
matching the identification information in the first message with preset identification information stored in the in-vehicle gateway; and
if the matching succeeds, sending a second message, where the second message is used to indicate the second in-vehicle device to perform a target operation, is generated based on the first message, and meets a second communications protocol supported by the second in-vehicle device, and the first communications protocol is different from the second communications protocol.

In the in-vehicle gateway communication method provided in this embodiment, only when the identification information of the first message successfully matches the preset identification information by using the preset identification information set in the in-vehicle gateway of the vehicle, the in-vehicle gateway sends the second message, to indicate, by using the second message, the second in-vehicle device to perform the target operation. However, when the identification information in the first message cannot match the preset identification information stored in the gateway, the in-vehicle gateway does not send the second information to control the second in-vehicle device to perform the target operation. This reduces a security threat to the in-vehicle network, and improves security performance of the in-vehicle network of the vehicle.

In a possible implementation of the first aspect of this application, if the first in-vehicle device is an in-vehicle device that supports an Ethernet protocol and the second in-vehicle device is an in-vehicle device that supports a CAN protocol, the first message is an Ethernet packet and the second message is a CAN packet.

According to the in-vehicle gateway communication method in this embodiment, when identification information in the Ethernet packet received by the in-vehicle gateway does not match the preset identification information, it indicates that the Ethernet packet may be malicious data from the internet, so that the in-vehicle gateway does not convert the Ethernet packet that fails to match the identification information into the CAN packet, and does not send the CAN packet to a CAN bus. In this way, the in-vehicle gateway matches the Ethernet packet. This reduces a risk of the internet from outside the in-vehicle network, so that the malicious data cannot enter the CAN bus through the in-vehicle gateway, and further improves security performance of the in-vehicle network.

In a possible implementation of the first aspect of this application, if the first in-vehicle device is an in-vehicle device that supports a CAN protocol and the second in-vehicle device is an in-vehicle device that supports an Ethernet protocol, the first message is a CAN packet and the second message is an Ethernet packet.

According to the in-vehicle gateway communication method provided in this embodiment, similarly, when identification information in the CAN packet received by the in-vehicle gateway does not match the preset identification information, it indicates that the CAN packet may have a security risk, so that the in-vehicle gateway does not convert the CAN packet that fails to match the identification information into the Ethernet packet. In this way, the in-vehicle gateway matches the CAN packet. This reduces a security threat from the CAN packet to the in-vehicle device of the Ethernet protocol, and improves security performance of the in-vehicle network of the vehicle.

In a possible implementation of the first aspect of this application, the matching the identification information in the first message with preset identification information stored in the in-vehicle gateway includes: matching, by searching whether the preset identification information stored in the in-vehicle gateway includes the identification information of the first message, the identification information of the first message with the preset identification information stored in the in-vehicle gateway, where the in-vehicle gateway stores at least one piece of the preset identification information.

In a possible implementation of the first aspect of this application, the first message is an Ethernet packet, and the identification information of the first message includes one or more of the following: a predefined flag bit in a source MAC address, a predefined flag bit in a destination MAC address, and a predefined flag bit in a protocol type, which are in the Ethernet packet.

In a possible implementation of the first aspect of this application, the first message is a CAN packet, and the identification information of the first message includes a CAN ID in the CAN packet.

In a possible implementation of the first aspect of this application, if the matching succeeds, the sending a second message specifically includes: the in-vehicle gateway stores a mapping relationship, and the mapping relationship is a mapping relationship between the preset identification information and message construction information;
if the matching the identification information in the first message with the preset identification information stored in the in-vehicle gateway succeeds, corresponding message construction information is obtained based on the successfully matched preset identification information; and the second message is generated by using the message construction information and the first message.

According to the in-vehicle gateway communication method provided in this embodiment, when determining the second message after successfully matching the identification information of the first message with the preset identification information, the in-vehicle gateway can obtain the second message by querying a pre-stored mapping relationship, instead of obtaining the second message after performing protocol conversion based on the first message. In this way, the in-vehicle gateway can directly obtain the second message by searching a second mapping relationship based on the preset identification information. A calculation amount of searching for the mapping relationship is small. This increases a speed of performing protocol conversion by the in-vehicle gateway, and further improves protocol conversion efficiency of the in-vehicle gateway.

In a possible implementation of the first aspect of this application, the second message is a CAN packet, and the message construction information includes a CAN ID in the CAN packet.

In a possible implementation of the first aspect of this application, the second message is an Ethernet packet, and the message construction information includes one or more of the following: a protocol type of the Ethernet packet, a predefined flag in a source MAC address and/or a destination MAC address in the Ethernet packet.

According to a second aspect of this application, an in-vehicle gateway is provided. The in-vehicle gateway includes: a transceiver module, configured to receive a first message from a first in-vehicle device, where the first message meets a first communications protocol supported by the first in-vehicle device, is used to indicate a second in-vehicle device to perform a target operation, and includes identification information; an identification module, configured to identify the identification information in the first message; a determining module, configured to: match the identification information in the first message and preset identification information stored in the in-vehicle gateway, and determine whether preset identification information that matches the identification information in the first message exists in the preset identification information stored in the in-vehicle gateway, and if the matching succeeds, send a matching result to a message construction module; and the message construction module, configured to generate a second message based on the matching result sent by the determining module, where the second message meets a second communications protocol supported by the second in-vehicle device, and the first communications protocol is different from the second communications protocol, where the transceiver module is further configured to send the second message, where the second message is used to indicate the second in-vehicle device to perform a target operation.

In a possible implementation of the second aspect of this application, if the first in-vehicle device is an in-vehicle device that supports a CAN protocol and the second in-vehicle device is an in-vehicle device that supports an Ethernet protocol, the first message is a CAN packet and the second message is an Ethernet packet.

In a possible implementation of the second aspect of this application, if the first in-vehicle device is an in-vehicle device that supports an Ethernet protocol and the second in-vehicle device is an in-vehicle device that supports a CAN protocol, the first message is an Ethernet packet and the second message is a CAN packet.

In a possible implementation of the second aspect of this application, the determining module is specifically configured to match, by searching whether the preset identification information stored in the in-vehicle gateway includes the identification information of the first message, the identification information of the first message with the preset identification information stored in the in-vehicle gateway, where the in-vehicle gateway stores at least one piece of the preset identification information.

In a possible implementation of the second aspect of this application, the first message is an Ethernet packet, and the identification information of the first message includes one or more of the following: a predefined flag bit in a source MAC address, a predefined flag bit in a destination MAC address, and a predefined flag bit in a protocol type, which are in the Ethernet packet.

In a possible implementation of the second aspect of this application, the first message is a CAN packet, and the identification information of the first message includes a CAN ID in the CAN packet.

In a possible implementation of the second aspect of this application, the in-vehicle gateway stores a first mapping relationship, and the first mapping relationship is a mapping relationship between the preset identification information and message construction information. The message construction module is specifically configured to: if the matching the identification information in the first message with the preset identification information stored in the in-vehicle gateway succeeds, obtain corresponding message construction information based on the successfully matched preset identification information; and generate the second message by using the message construction information.

In a possible implementation of the second aspect of this application, the second message is a CAN packet, and the message construction information includes a CAN ID in the CAN packet.

In a possible implementation of the second aspect of this application, the second message is an Ethernet packet, and the message construction information includes one or more of the following: a predefined flag in a protocol type of the Ethernet packet, and a predefined flag in a source MAC address and a predefined flag in a destination MAC address in the Ethernet packet.

According to a third aspect of this application, an in-vehicle gateway is provided. The in-vehicle gateway includes: a first communications interface, a second communications interface, a processor, and a memory. The first communications interface is configured to: receive a first message from a first in-vehicle device, and send the first message to the processor, where the first message meets a first communications protocol supported by the first in-vehicle device, is used to indicate a second in-vehicle device to perform a target operation, and includes identification information. The memory stores an instruction, and when the processor invokes and executes the instruction, the processor is enabled to: after receiving the first message, identify identification information in the first message, and match the identification information in the first message with preset identification information stored in the in-vehicle gateway. The processor is further configured to: if the matching succeeds, send a second message to the second communications interface, where the second communications interface is further configured to send the second message, the second message is used to indicate the second in-vehicle device to perform a target operation, is generated based on the first message, and meets a second communications protocol supported by the second in-vehicle device, and the first communications protocol is different from the second communications protocol.

In a possible implementation of the third aspect of this application, if the first in-vehicle device is an in-vehicle device that supports a CAN protocol and the second in-vehicle device is an in-vehicle device that supports an Ethernet protocol, the first message is a CAN packet and the second message is an Ethernet packet.

In a possible implementation of the third aspect of this application, if the first in-vehicle device is an in-vehicle device that supports an Ethernet protocol and the second in-vehicle device is an in-vehicle device that supports a CAN protocol, the first message is an Ethernet packet and the second message is a CAN packet.

In a possible implementation of the third aspect of this application, the processor is specifically configured to match, by searching whether the preset identification information stored in the in-vehicle gateway includes the identification information of the first message, the identification information of the first message with the preset identification information stored in the in-vehicle gateway, where the in-vehicle gateway stores at least one piece of the preset identification information.

In a possible implementation of the third aspect of this application, if the first message is an Ethernet packet, and the identification information of the first message includes one or more of the following: a predefined flag bit in a source MAC address, a predefined flag bit in a destination MAC address, and a predefined flag bit in a protocol type, which are in the Ethernet packet.

In a possible implementation of the third aspect of this application, if the first message is a CAN packet, and the identification information of the first message includes a CAN ID in the CAN packet.

In a possible implementation of the third aspect of this application, the in-vehicle gateway stores a first mapping relationship, and the first mapping relationship is a mapping relationship between the preset identification information and message construction information. The processor is further configured to: if the matching the identification information in the first message with the preset identification information stored in the in-vehicle gateway succeeds, obtain corresponding message construction information based on the successfully matched preset identification information; and generate the second message by using the message construction information.

In a possible implementation of the third aspect of this application, if the second message is a CAN packet, and the message construction information includes a CAN ID in the CAN packet.

In a possible implementation of the third aspect of this application, if the second message is an Ethernet packet, and the message construction information includes one or more of the following: a protocol type of the Ethernet packet, a predefined flag in a source MAC address and a destination MAC address in the Ethernet packet.

According to a fourth aspect of this application, an intelligent vehicle is provided. The intelligent vehicle includes: a first in-vehicle device, a second in-vehicle device, and an in-vehicle gateway. The first in-vehicle device is configured to send a first message to the in-vehicle gateway, where the first message meets a first communications protocol supported by the first in-vehicle device, is used to indicate a second in-vehicle device to perform a target operation, and includes identification information. The in-vehicle gateway is configured to: receive the first message from the first in-vehicle device, and identify the identification information in the first message. The in-vehicle gateway is further configured to match the identification information in the first message with preset identification information stored in the in-vehicle gateway. If the matching succeeds, the in-vehicle gateway sends a second message, where the second message is used to indicate the second in-vehicle device to perform a target operation, is generated based on the first message, and meets a second communications protocol supported by the second in-vehicle device, and the first communications protocol is different from the second communications protocol.

In a possible implementation of the fourth aspect of this application, if the first in-vehicle device is an in-vehicle device that supports a CAN protocol and the second in-vehicle device is an in-vehicle device that supports an Ethernet protocol, the first message is a CAN packet and the second message is an Ethernet packet.

In a possible implementation of the fourth aspect of this application, if the first in-vehicle device is an in-vehicle device that supports an Ethernet protocol and the second in-vehicle device is an in-vehicle device that supports a CAN protocol, the first message is an Ethernet packet and the second message is a CAN packet.

In a possible implementation of the fourth aspect of this application, the in-vehicle gateway is specifically configured to match, by searching whether the preset identification information stored in the gateway includes the identification information of the first message, the identification information of the first message with the preset identification information stored in the gateway, where the gateway stores at least one piece of the preset identification information.

In a possible implementation of the fourth aspect of this application, if the first message is an Ethernet packet, and the identification information of the first message includes one or more of the following: a predefined flag bit in a source MAC address, a predefined flag bit in a destination MAC address, and a predefined flag bit in a protocol type, which are in the Ethernet packet.

In a possible implementation of the fourth aspect of this application, if the first message is a CAN packet, and the identification information of the first message includes a CAN ID in the CAN packet.

In a possible implementation of the fourth aspect of this application, the in-vehicle gateway stores a first mapping relationship, and the first mapping relationship is a mapping relationship between the preset identification information and message construction information; and
the in-vehicle gateway is specifically configured to: if the matching the identification information in the first message with the preset identification information stored in the in-vehicle gateway succeeds, obtain corresponding message construction information based on the successfully matched preset identification information; and generate the second message by using the message construction information and the first message.

In a possible implementation of the fourth aspect of this application, the second message is a CAN packet, and the message construction information includes a CAN ID in the CAN packet.

In a possible implementation of the fourth aspect of this application, the second message is an Ethernet packet, and the message construction information includes one or more of the following: a predefined flag in a protocol type of the Ethernet packet, a predefined flag in a source MAC address and a predefined flag in a destination MAC address in the Ethernet packet.

In conclusion, this application provides an in-vehicle gateway communication method, an in-vehicle gateway, and an intelligent vehicle. The in-vehicle gateway communication method includes: receiving a first message from a first in-vehicle device, identifying identification information in the first message, matching the identification information with preset identification information stored in the in-vehicle gateway, and if the matching succeeds, sending a second message, to indicate, by using the second message, a second in-vehicle device to perform a target operation. However, when the identification information in the first message cannot match the preset identification information stored in the gateway, the in-vehicle gateway does not send the second information to control the second in-vehicle device to perform the target operation. This application provides the in-vehicle gateway communication method, the in-vehicle gateway, and the intelligent vehicle. This reduces a security threat to the in-vehicle network, and improves security performance of the in-vehicle network of the vehicle.

### BRIEF DESCRIPTION OF DRAWINGS

FIG. 1 is a schematic structural diagram of an application scenario according to this application;
FIG. 2 is a schematic diagram of a gateway structure according to an embodiment of an in-vehicle gateway communication method of this application;
FIG. 3 is a schematic diagram of a gateway structure according to an embodiment of an in-vehicle gateway communication method of this application;
FIG. 4 is a schematic flowchart according to an embodiment of an in-vehicle gateway communication method of this application;
FIG. 5 is a schematic flowchart according to an embodiment of an in-vehicle gateway communication method of this application;
FIG. 6 is a schematic diagram of a packet structure of an Ethernet packet;
FIG. 7 is a schematic diagram of a packet structure of a CAN packet;
FIG. 8 is a schematic flowchart according to an embodiment of an in-vehicle gateway communication method of this application;
FIG. 9 is a schematic structural diagram according to an embodiment of an in-vehicle gateway of this application;
FIG. 10 is a schematic structural diagram according to an embodiment of an in-vehicle gateway of this application; and
FIG. 11 is a schematic structural diagram according to an embodiment of an intelligent vehicle of this application.

### DESCRIPTION OF EMBODIMENTS

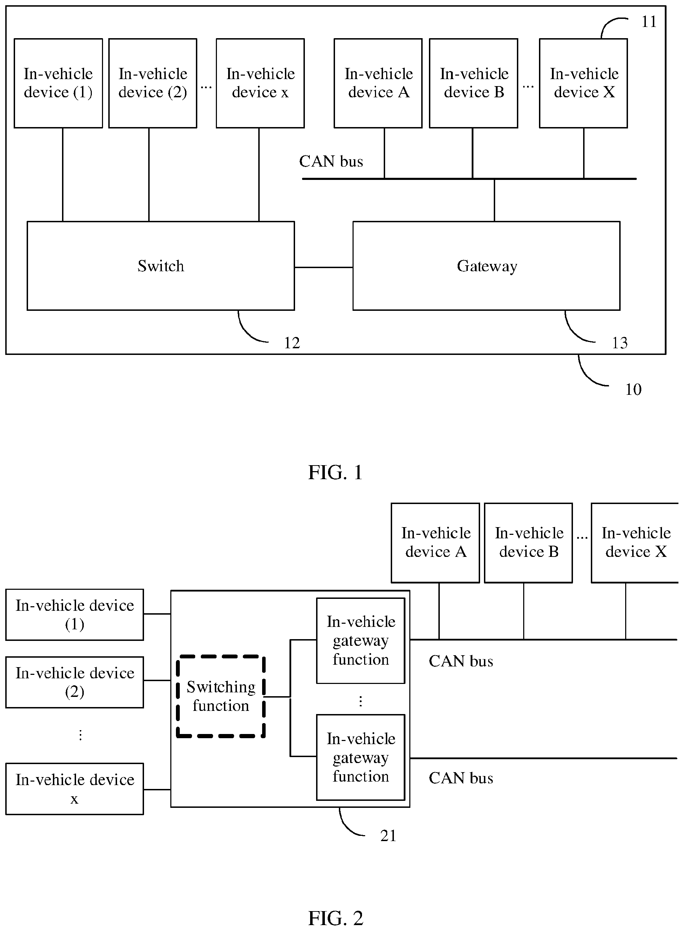

FIG. 1 is a schematic structural diagram of an application scenario according to this application. As shown in FIG. 1, in the current field of automotive technologies, a vehicle 10 carries various types of in-vehicle devices 11, and implements different functions by using the in-vehicle devices 11. For example, the in-vehicle device 11 may be an electronic control unit (electronic control unit, ECU). However, because software and hardware of the in-vehicle device 11 are usually independent of the vehicle, to facilitate unified management on the in-vehicle devices 11 in the vehicle 10, an international standard ISO 11898: controller area network (controller area network, CAN) protocol technology from the International Organization for Standardization (international organization for standardization, ISO) is widely applied. Currently, the CAN protocol technology is a main communications protocol for in-vehicle communication. The CAN protocol technology requires all the in-vehicle devices 11 to be connected to a CAN bus and to perform communication by using the CAN protocol. In an example shown in FIG. 1, in-vehicle devices A, B, ..., and X each support the CAN protocol and are connected to the CAN bus, so that an in-vehicle network including the CAN bus and the in-vehicle devices A, B, ..., and X is constructed, and the in-vehicle devices 11 in the vehicle 10 can be managed by using the in-vehicle network. Optionally, in an example of the embodiment shown in FIG. 1, the CAN bus includes but is not limited to a power system CAN bus, a comfort system CAN bus, a body system CAN bus, an information entertainment system CAN bus, and the like of the vehicle 10.

In addition, with continuous development of communications technologies and automotive technologies, an increasing quantity of in-vehicle devices 11 that can be connected to the internet are connected to an in-vehicle network inside the vehicle 10 by a manufacturer of the vehicle 10 or a user of the vehicle 10, so that the in-vehicle device connected to the internet provides more functions for the vehicle and the user of the vehicle, for example, navigation, remote system upgrade, and automatic driving. The in-vehicle device 11 that can be connected to the internet needs to support an Ethernet protocol to access the internet. If the in-vehicle device 11 that supports the Ethernet protocol is directly connected to the CAN bus inside the vehicle, the in-vehicle device 11 that supports the Ethernet protocol cannot communicate with another in-vehicle device that supports a CAN protocol. Therefore, a switch 12 and a gateway 13 are introduced inside the vehicle 10, to implement communication between the in-vehicle device 11 that supports the Ethernet protocol and the in-vehicle device 11 that supports the CAN protocol. For example, in an example shown in FIG. 1, in-vehicle devices (1), (2), ..., and x support the Ethernet protocol, in-vehicle devices A, B, ..., and X support the CAN protocol, and the switch 12 is configured to perform a packet exchange function on data that supports the Ethernet protocol. After the in-vehicle devices (1), (2), ..., and x send communication data of the Ethernet protocol to the gateway 13 by using the switch 12, the gateway 13 is configured to convert the communication data of the Ethernet protocol into communication data of the CAN protocol, and then send the communication data of the CAN protocol to the CAN bus, so that a corresponding in-vehicle device in the in-vehicle devices A, B, ..., and X can receive the communication data of the CAN protocol by using the CAN bus. Alternatively, the in-vehicle devices A, B, ..., and X may send communication data of the CAN protocol to the gateway 13, and the gateway 13 is configured to convert the communication data of the CAN protocol into communication data of the Ethernet protocol, and then send the communication data of the Ethernet protocol to the switch 12, so that the switch 12 sends the communication data of the Ethernet protocol to a corresponding in-vehicle device in the in-vehicle devices (1), (2), ..., and x. Optionally, the Ethernet in the embodiments of this application includes an automotive Ethernet technology. The automotive Ethernet technology is based on a conventional Ethernet technology, and the used Ethernet protocol may be the automotive Ethernet hardware standard IEEE 802.3bw (also referred to as IEEE 100BASE-TX or Broad R-Reach).

However, in the vehicle 10 shown in FIG. 1, because all the in-vehicle devices (1), (2), ..., and x can be connected to the internet, and the in-vehicle devices are connected to the CAN bus of the vehicle by using the switch 12 and the gateway 13, the in-vehicle devices can access the in-vehicle network. These in-vehicle devices (1), (2), ..., and x that can be connected to the internet simultaneously bring entries to malicious data from the internet outside the in-vehicle network. Once the malicious data from the internet enters the CAN bus through the in-vehicle devices (1), (2), ..., and x, a security threat is brought to the in-vehicle network of the vehicle, and security performance of the existing in-vehicle network of the vehicle is poor.

Therefore, in order to further ensure security of the in-vehicle network after the in-vehicle device that supports the Ethernet protocol is introduced, this application provides the in-vehicle gateway communication method, the in-vehicle gateway, and the intelligent vehicle. On a basis that a protocol conversion function of the in-vehicle gateway can be satisfied, the in-vehicle gateway is further used to reduce a security threat to the in-vehicle network, and further to improve security performance of the in-vehicle network of the vehicle.

The following describes, with reference to the accompanying drawings, the gateway communication method provided in this application.

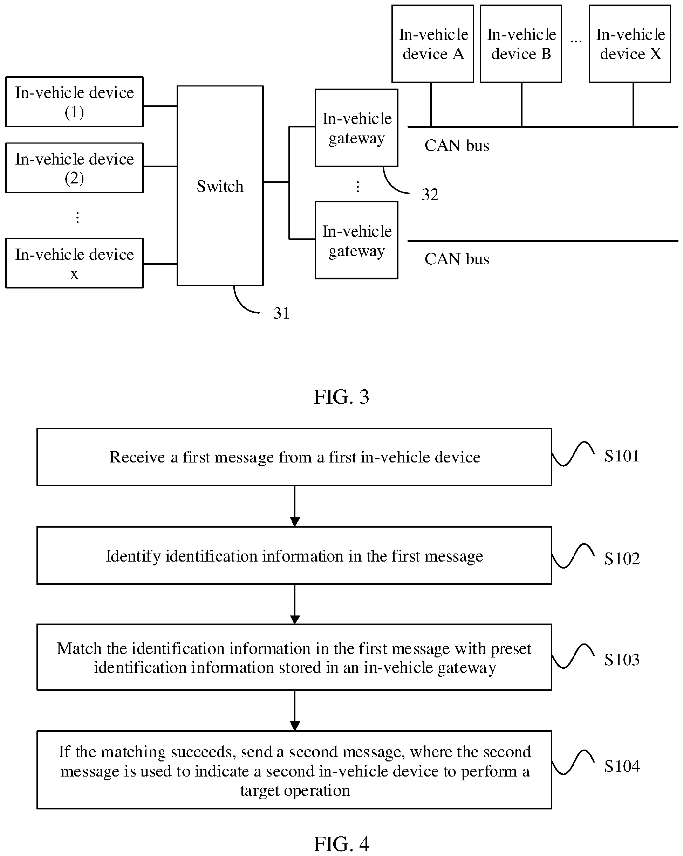

Specifically, the in-vehicle gateway communication method provided in the embodiments of this application may be performed by a gateway switch shown in FIG. 2, or may be performed by an in-vehicle gateway shown in FIG. 3. In the embodiments of this application, an example in which an execution body is the in-vehicle gateway is used for description, but is not intended to limit the execution body.

FIG. 2 is a schematic diagram of a gateway structure according to an embodiment of an in-vehicle gateway communication method of this application. In the gateway structure shown in FIG. 2, a gateway switch 21 has both a switch function and a gateway function, and the gateway switch 21 may connect to in-vehicle devices (1), (2), ..., and x that support an Ethernet protocol in a vehicle 10, and connect to at least one CAN bus. After performing packet exchange on communication data, of the Ethernet protocol, sent by the in-vehicle devices (1), (2), ..., and x by using the switch function and performing protocol conversion by using the gateway function, the gateway switch 21 sends communication data of a CAN protocol obtained through conversion to the CAN bus, so that a corresponding in-vehicle device on the CAN bus can receive the communication data of the CAN protocol. Alternatively, after receiving communication data of a CAN protocol on the CAN bus, performing protocol conversion on the communication data of the CAN protocol on the CAN bus by using the gateway function, and performing packet switching by using the switch function, the gateway switch 21 may further send the converted communication data of the Ethernet protocol to corresponding in-vehicle devices (1), (2), ..., and x. In other words, the in-vehicle gateway communication method provided in the embodiments of this application may be performed by the gateway switch 21 in FIG. 2 when the gateway function of the gateway switch 21 is implemented.

Alternatively, FIG. 3 is a schematic diagram of a gateway structure according to an embodiment of an in-vehicle gateway communication method of this application. In the gateway structure shown in FIG. 3, a switch 31 is connected to in-vehicle devices (1), (2), ..., and x that support an Ethernet protocol in a vehicle 10, and is connected to at least one in-vehicle gateway 32. Each in-vehicle gateway 32 is connected to the switch 31, and each in-vehicle gateway 32 is connected to one CAN bus. For any in-vehicle gateway 32 in the figure, after receiving communication data, of the Ethernet protocol, sent by the switch 31, the in-vehicle gateway 32 converts the communication data of the Ethernet protocol into communication data of a CAN network protocol, and then sends the communication data of the CAN network protocol to the CAN bus. Alternatively, the in-vehicle 32 converts communication data, of a CNA network protocol, received by using the CAN bus into communication data of the Ethernet protocol, and then sends the communication data of the Ethernet protocol to the switch 31. In other words, the in-vehicle gateway communication method provided in the embodiments of this application may alternatively be performed by the in-vehicle gateway in FIG. 3.

Specific embodiments are used below to describe in detail the technical solutions of this application. The following several specific embodiments may be combined with each other, and a same or similar concept or process may not be described repeatedly in some embodiments.

### Embodiment 1

FIG. 4 is a schematic flowchart according to an embodiment of an in-vehicle gateway communication method of this application. As shown in FIG. 4, the gateway communication method provided in this embodiment is used for message conversion between two protocols, and the conversion may be specifically conversion from an Ethernet protocol to a CAN protocol. The first in-vehicle device may be an in-vehicle device that supports the Ethernet protocol, and the second in-vehicle device may be an in-vehicle device that supports the CAN protocol. The method specifically includes the following steps.

S101: The in-vehicle gateway receives a first message from a first in-vehicle device. The first message meets a first communications protocol supported by the first in-vehicle device, is used to indicate a second in-vehicle device to perform a target operation, and includes identification information.

Specifically, the in-vehicle gateway in this embodiment is disposed between the first in-vehicle device and the second in-vehicle device, and is configured to: when the first in-vehicle device and the second in-vehicle device support different communications protocols, perform protocol conversion on the first message that is sent by the first in-vehicle device to the second in-vehicle device through the in-vehicle gateway. The first message meets an Ethernet communications protocol, the first message may be specifically an Ethernet packet, and the Ethernet packet is used to indicate the second in-vehicle device to perform a target operation. In S101, when the first in-vehicle device needs to indicate, through the in-vehicle gateway, the second in-vehicle device to perform the target operation, the first in-vehicle device sends an Ethernet packet to the in-vehicle gateway, and the in-vehicle gateway receives the Ethernet packet from the first in-vehicle device. Herein, when the in-vehicle gateway is the gateway switch in FIG. 2, the first message received by the in-vehicle gateway is directly sent by the in-vehicle device to the gateway switch, and the in-vehicle gateway directly receives the first message sent by the first in-vehicle device. Alternatively, when the in-vehicle gateway is the in-vehicle gateway in FIG. 3, the first message may be sent by the first in-vehicle device to the in-vehicle gateway by using the switch, and the in-vehicle gateway needs to receive the first message by using the switch. In this embodiment of the present invention, whether the first message is directly received or indirectly received is not limited herein.

In this embodiment, the first message further includes identification information. The identification information is used by the in-vehicle gateway to determine the target operation performed by the second in-vehicle device indicated by the first message, and the identification information may be information included in the first message sent by the first in-vehicle device. The in-vehicle gateway can determine, by using the information in the first message, the target operation performed by the second in-vehicle device indicated by the first message. For example, if the first message is an Ethernet packet, the identification information of the first message may be one or more of the following in the Ethernet packet: a predefined identifier in a source MAC address, a predefined identifier in a destination MAC address, and a predefined identifier in a protocol type. The in-vehicle gateway may determine, when the destination MAC address of the Ethernet packet is 1, that the Ethernet packet is used to indicate the second in-vehicle device to perform a target operation of turning on an air conditioner. Alternatively, the identification information may be information specially added by the first in-vehicle device to the first message used to indicate the second in-vehicle device to perform a target operation, so that the in-vehicle gateway can determine, by using the information added to the first message, the target operation performed by the second in-vehicle device indicated by the first message. For example, when the first message is an Ethernet packet, the first in-vehicle device may add "1" to a specific location in the Ethernet packet, so that the in-vehicle gateway may determine, based on the specific location "1" in the Ethernet packet, that the Ethernet packet is used to indicate the second in-vehicle device to perform a target operation of turning on an air conditioner.

Optionally, the in-vehicle device that supports the Ethernet protocol in this embodiment may support a TSN Ethernet, an AVB Ethernet, and a conventional Ethernet. The in-vehicle device that supports the CAN protocol may support CAN2.0A, CAN2.0B, and CAN-FD protocols.

Optionally, the device that supports the Ethernet protocol in this embodiment includes: a human-machine interface device, a diagnosis interface device, a TBox device, an ADAS controller device, and the like. The device that supports the CAN protocol includes: a power controller, a body controller, a power management controller, a power controller, and the like.

S102: The in-vehicle gateway identifies the identification information in the first message based on the first message obtained in S101.

Then, in S102, the in-vehicle gateway identifies the identification information included in the first message obtained in S101. In a possible implementation, after receiving the first message, the in-vehicle gateway may parse the first message, to determine the identification information in the first message. For example, if the first message is an Ethernet packet and the identification information is a source MAC address and a destination MAC address of the CAN packet, the in-vehicle gateway may determine the source MAC address and the destination MAC address of the Ethernet packet by parsing data of data bits in which the source MAD address and the destination MAC address in the Ethernet packet are located.

S103: The in-vehicle gateway matches the identification information, in the first message, identified in S102 with preset identification information stored in the in-vehicle gateway.

Subsequently, in S103, the in-vehicle gateway matches the identification information, of the first message, identified in S102 with the preset identification information stored in the in-vehicle gateway. The in-vehicle gateway stores at least one piece of preset identification information, and each piece of preset identification information is used to indicate a target operation performed by a second device indicated by the first message sent by the first in-vehicle device to the in-vehicle gateway. The matching includes: determining whether the identification information of the first message is the same as the preset identification information stored in the in-vehicle gateway, that is, determining whether the preset identification information includes the determined identification information of the first message.

For example, the preset identification information stored in the in-vehicle gateway includes "1" and "2", where "1" is used to indicate that the target operation performed by the second device indicated by the first message is "turning on an air conditioner", and "2" is used to indicate that the target operation performed by the second device indicated by the first message is "turning on a radio". Therefore, if the in-vehicle gateway identifies that the identification information of the first message is "1", because the preset identification information stored in the in-vehicle gateway includes "1", it is determined that the identification information of the first message is successfully matched. However, if the in-vehicle gateway identifies that the identification information of the first message is "0", because the preset identification information stored in the in-vehicle gateway does not include "0", it is determined that the identification information of the first message is not successfully matched.

S104: If the matching succeeds, the in-vehicle gateway sends a second message, where the second message is used to indicate the second in-vehicle device to perform the target operation.

Finally, when the in-vehicle gateway successfully matches the identification information of the first message with the stored preset identification information in S103, the in-vehicle gateway sends the second message in S104, to indicate, by using the second message, the second in-vehicle device to perform the target operation. However, if the in-vehicle gateway fails to match the identification information of the first message with the preset identification information in S103, the in-vehicle gateway does not send the second message in S104, that is, does not indicate, by using the second message, the second in-vehicle device to perform the target operation. The second message is generated by the in-vehicle gateway based on the first message, the second message meets a second communications protocol supported by the second in-vehicle device, and the first communications protocol supported by the first in-vehicle device is different from the second communications protocol supported by the second in-vehicle device.

Specifically, in this embodiment, the first in-vehicle device is an in-vehicle device that supports an Ethernet protocol, and the second in-vehicle device is an in-vehicle device that supports a CAN protocol. In this case, the first message supports the Ethernet protocol, the second message supports the CAN network communication protocol, and the first message may be an Ethernet packet, and the second message may be a CAN packet. In S104, after receiving the Ethernet packet and determining the CAN packet according to the foregoing steps, the in-vehicle gateway may send the CAN packet to a CAN bus. After the second in-vehicle device obtains the CAN packet from the CAN bus, the second in-vehicle device performs the target operation based on the obtained CAN packet. Herein, the in-vehicle gateway sends the second message. When the in-vehicle gateway is the gateway switch in FIG. 2, after determining a CAN packet that needs to be sent to the second in-vehicle device, the in-vehicle gateway sends the CAN packet to a CAN bus on which the second in-vehicle device is located. When the in-vehicle gateway is the in-vehicle gateway in FIG. 3, the in-vehicle gateway may directly send a determined CAN packet to a CAN bus connected to the in-vehicle gateway.

Therefore, in the in-vehicle gateway communication method provided in this embodiment, when receiving the first message from the first in-vehicle device, the in-vehicle gateway identifies the identification information in the first message, and matches the identification information with the preset identification information stored in the in-vehicle gateway. When the matching succeeds, the in-vehicle gateway sends the second message, to indicate, by using the second message, the second in-vehicle device to perform the target operation. Therefore, the in-vehicle gateway may filter, based on whether the identification information of the first message is stored, whether the first message can be used by the in-vehicle gateway to control the second in-vehicle device to perform the target operation. When the in-vehicle gateway allows the first message to control, through the in-vehicle gateway, the second in-vehicle device to perform the target operation, the identification information of the first message may be stored as the preset identification information, so that after the first message successfully matches the preset identification information, the in-vehicle gateway sends the second message to control the second in-vehicle device to perform the target operation. When the in-vehicle gateway does not allow the first message to control, through the in-vehicle gateway, the second in-vehicle device to perform the target operation, the identification information of the first message is not stored in the in-vehicle gateway. Therefore, when the identification information in the first message cannot match the preset identification information stored in the gateway, the in-vehicle gateway does not send the second information to control the second in-vehicle device to perform the target operation.

In this case, this embodiment is applied to an in-vehicle network scenario shown in FIG. 1-3. When the first in-vehicle device is an in-vehicle device that supports an Ethernet protocol, and the second in-vehicle device is an in-vehicle device that supports a CAN protocol, a manufacturer or a user of a vehicle may use the preset identification information stored in the in-vehicle gateway, so that after receiving the Ethernet packet, the in-vehicle gateway sends the CAN packet to the CAN bus only when identification information in the Ethernet packet successfully matches the preset identification information, to control the second in-vehicle device to perform the target operation. Therefore, when the identification information in the Ethernet packet received by the in-vehicle gateway does not match the preset identification information, it indicates that the Ethernet packet may be malicious data from the internet. For example, the second in-vehicle device on the CAN bus is maliciously controlled to perform a target operation. To prevent the malicious data from entering the CAN bus of the in-vehicle network, the in-vehicle gateway does not convert an Ethernet packet that fails to match the identification information into a CAN packet, and does not send the CAN packet to the CAN bus. In this way, a malicious Ethernet packet sent by the first in-vehicle device cannot be converted into the CAN packet through the in-vehicle gateway and cannot be sent to the CAN bus, so that even if the in-vehicle gateway receives an Ethernet packet used to indicate the second in-vehicle device to perform a target operation, the in-vehicle gateway does not send the CAN packet to the second in-vehicle device to enable the second in-vehicle device to perform the target operation. In this way, through matching of the in-vehicle gateway, a risk of the internet from outside the in-vehicle network is reduced, so that the malicious data cannot enter the CAN bus through the in-vehicle gateway. Therefore, the in-vehicle gateway of the vehicle is used to reduce a security threat to the in-vehicle network, and further to improve security performance of the in-vehicle network.

Further, based on the foregoing embodiment, in a possible specific implementation of S104 in this embodiment, the in-vehicle gateway obtains the second message in a manner of performing protocol conversion on the first message. The gateway converts the first message that uses the first communications protocol into the second message that uses the second communications protocol. For a specific method and a principle of performing protocol conversion by the in-vehicle gateway, refer to the prior art. A protocol conversion manner of the in-vehicle gateway is not limited in this embodiment. It is emphasized that the in-vehicle gateway performs protocol conversion only when the identification information of the first message is successfully matched in S103, and then the in-vehicle gateway performs protocol conversion from the first message to the second message, and sends the second message obtained after the protocol conversion.

Alternatively, in another possible implementation of S104 in this embodiment, to improve a protocol conversion speed of the in-vehicle gateway and to improve protocol conversion efficiency of the in-vehicle gateway, the in-vehicle gateway further stores a mapping relationship used by the in-vehicle gateway to determine the second message, and the mapping relationship includes a mapping relationship between the preset identification information and message construction information. In this case, after successfully matching the identification information in the first message with the preset identification information stored in the in-vehicle gateway in S103, the in-vehicle gateway obtains, from the mapping relationship based on the successfully matched preset identification information, the message construction information corresponding to the preset identification information, and can generate the second message based on the message construction information and the first message. Optionally, the in-vehicle network stores the mapping relationship in a form of a table.

The message construction information includes the second message that can be determined by the in-vehicle gateway by using the first message. In this case, the in-vehicle gateway provided in this embodiment may store, in advance by using the mapping relationship, message construction messages corresponding to different preset identification information. After the gateway successfully matches the preset identification information with the identification information of the first message, the in-vehicle gateway may directly use, as the second message, message construction information that is obtained by searching the mapping relationship based on the successfully matched identification information. In addition, in this embodiment, when the in-vehicle gateway may determine, by using the mapping relationship, the second message obtained after protocol conversion is performed on the first message, and the in-vehicle gateway may no longer perform protocol conversion on the first message. This improves efficiency of determining the second message by the in-vehicle gateway based on the first message.

Alternatively, the message construction information includes a part of information in the second message, and after the in-vehicle gateway in this embodiment successfully matches the identification information of the first message with the preset identification information, the in-vehicle gateway searches the mapping relationship based on the successfully matched identification information of the performance, to obtain the part of message construction information of the second message. Then, the second message is jointly obtained based on the first message and the message construction information, so that a speed and efficiency of performing protocol conversion on the entire first message by the in-vehicle gateway to obtain the second message are also increased to some extent.

With reference to the accompanying drawings, the following describes a manner in which the in-vehicle gateway determines the second message based on the mapping relationship in this embodiment.

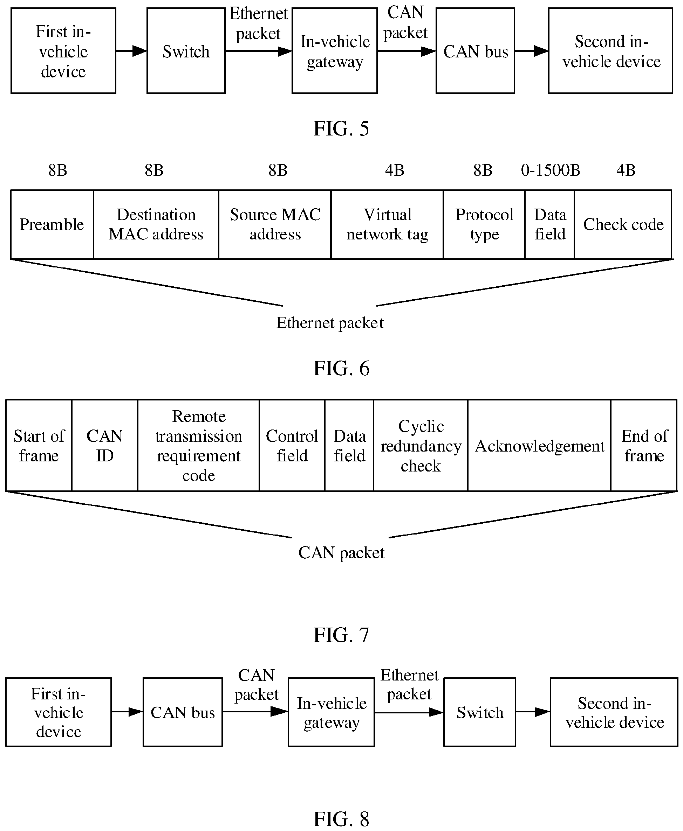

FIG. 5 is a schematic flowchart according to an embodiment of an in-vehicle gateway communication method of this application. In an example shown in FIG. 5, a first in-vehicle device is an in-vehicle device that supports an Ethernet protocol, and a second in-vehicle device is an in-vehicle device that supports a CAN protocol. In this case, the first message is an Ethernet packet, and the second message is a CAN packet. The in-vehicle gateway stores a mapping relationship, and the mapping relationship includes a correspondence between preset identification information of the Ethernet packet and message construction information of the CAN packet.

In this embodiment, the identification information of the first message is one or more of the following information in the Ethernet packet: a predefined flag bit in a source MAC address, a predefined flag bit in a destination MAC address, and a predefined flag bit in a protocol type, where the predefined flag bit refers to a specific bit in the MAC address in the Ethernet packet. Specifically, FIG. 6 is a schematic structural diagram of a packet of an Ethernet packet. As shown in FIG. 6, the Ethernet packet includes: a preamble (preamble), a destination MAC address (destination address), a source MAC address (source address), a virtual network tag (VLAN tag), a protocol type (ether type), a data field (data field), and a check code (CRC). In this embodiment, the predefined flag bit in the destination MAC address, the predefined flag bit in the source MAC address, and/or the predefined flag bit in the protocol type, which are in the Ethernet packet, are/is used as the identification information of the first message, and subsequent matching is performed on the identification information of the first message. The source MAC address is used to indicate a MAC address of the first in-vehicle device that sends the Ethernet packet, the destination MAC address is used to indicate a MAC address of the second in-vehicle device, and the protocol type is used to indicate a protocol type of the Ethernet packet, where the protocol type of the Ethernet packet includes AVB or TSN. For example, the mapping relationship stored in the in-vehicle gateway includes a correspondence between "a source MAC address = D1-06-9B-45-98-69 and a destination MAC address = 00-00-5E-00-01-01" and "first message construction information", where the first message construction information is used by the in-vehicle gateway to construct a CAN packet. Because a length of the preamble in the Ethernet packet is 8B, a length of the destination MAC address is 8B, and a length of the source MAC address is 8B, in this embodiment, the in-vehicle gateway may determine the destination MAC address in pre-defined flag bits of 9-16B in the Ethernet packet, and determines the source MAC address based on the pre-defined flag bits of 17-24B in the Ethernet packet.

As shown in FIG. 5, after receiving the Ethernet packet from the first in-vehicle device by using a switch, the in-vehicle gateway parses the Ethernet packet. When parsing a source MAC address of the Ethernet packet D1-06-9B-45-98-69 and a destination MAC address of the Ethernet packet 00-00-5E-00-01-01, the in-vehicle gateway determines that the identification information of the Ethernet packet is successfully matched, and further determines the first message construction information based on the mapping relationship.

Optionally, in the example shown in FIG. 5, if the first message construction information in the mapping relationship stored in the in-vehicle gateway is a preset CAN packet, after determining the CAN packet based on the mapping relationship, the in-vehicle gateway may send the CAN packet to the CAN bus, the second in-vehicle device obtains the CAN packet by using the CAN bus and performs the target operation.

Alternatively, in the example shown in FIG. 5, if the first message construction information in the mapping relationship stored in the in-vehicle gateway is a part of information in the CAN packet, after determining the first message construction information, the in-vehicle gateway further needs to generate the CAN packet based on the first message construction information. For example, FIG. 7 is a schematic diagram of a packet structure of the CAN packet. As shown in FIG. 7, the CAN packet includes: a start of frame (start of frame), a packet identifier (CAN ID), a remote transmission requirement (RTR) code, a control field, a data field (data field), and a cyclic redundancy check (CRC), an acknowledgement (ACK), and an end of frame (end of frame). Optionally, in this embodiment, the first message construction information may be the start of frame and the data field in the CAN packet. Therefore, after determining the first message construction information by using the mapping relationship, the in-vehicle gateway further generates the CAN packet based on the first message construction information. In addition, because the start of frame and the data field of the CAN packet are determined in the first message construction information, the in-vehicle gateway can determine the CAN packet only after determining the other part of the CAN packet based on the first message. This saves time for determining the start of frame and the data field of the CAN packet by the in-vehicle gateway.

Further, in the embodiment shown in FIG. 5, the identifier (CAN ID) in the CAN packet also represents a transmission priority of the packet in terms of physical layer implementation. In other words, if the in-vehicle gateway simultaneously receives a plurality of CAN packets that need to be sent to the CAN bus, the in-vehicle gateway preferentially sends a CAN packet with a small CAN identifier value to the CAN bus. Therefore, the first message construction information in the mapping relationship stored in the gateway in this embodiment may include the CAN ID, so that the CAN packet determined by the in-vehicle gateway can use a preset CAN ID to indicate a priority of the CAN packet. For example, if the first message is an Ethernet packet used to indicate an engine to perform emergency braking, and the in-vehicle gateway needs to preferentially convert the Ethernet packet used to indicate the engine to perform emergency braking to a CAN packet, and send the CAN packet to the CAN bus, after successfully matching identification information of the Ethernet packet with preset identification information, the in-vehicle gateway determines, based on a mapping relationship, that a CAN ID of a CAN packet in message construction information corresponding to the preset identification information is set to be relatively small. Finally, a priority of the CAN packet generated by the in-vehicle gateway based on the message construction information is relatively high, and the CAN packet generated by the in-vehicle gateway can be preferentially sent to the CAN bus.

It should be noted that, in the example shown in FIG. 5, an example in which the in-vehicle gateway receives one Ethernet packet of the first in-vehicle device and sends, to the CAN bus, one CAN packet used to indicate the second in-vehicle device is used for description. However, in an actual application of the in-vehicle gateway, one Ethernet packet may be used to indicate a plurality of different second in-vehicle devices to perform respective operations. In this case, in the mapping relationship in the in-vehicle gateway, one piece of preset identification information may be corresponding to a plurality of different message construction information, so that the plurality of CAN packets may be determined based on one Ethernet packet. For example, if the in-vehicle gateway receives an Ethernet packet that is sent by the first in-vehicle device and that is used to indicate automatic driving, a steering module on the CAN bus performs a steering operation, and a deceleration module on the CAN bus performs a deceleration operation at the same time. After receiving the Ethernet packet and successfully matching the identification information of the Ethernet packet with the preset identification information, the in-vehicle gateway may determine, by using the mapping relationship, diversion message construction information and deceleration message construction information that are corresponding to the preset identification information, determine, based on the diversion message construction information, a first CAN packet used to indicate the diversion module to perform a diversion operation, and determine, based on the deceleration message construction information, a second CAN packet used to indicate the deceleration module to perform a deceleration operation. Then, the in-vehicle gateway sends the first CAN packet and the second CAN packet to the CAN bus, so that one Ethernet packet is used to indicate the two in-vehicle devices to perform respective operations by using the CAN packet.

In conclusion, in the in-vehicle gateway communication method provided in this embodiment, when determining the CAN packet after successfully matching the identification information of the Ethernet packet with the preset identification information, the in-vehicle gateway can obtain the CAN packet by querying the pre-stored mapping relationship, instead of obtaining the CAN packet only after protocol conversion is performed based on the Ethernet packet. In this way, the in-vehicle gateway can directly obtain the CAN packet by searching a second mapping relationship based on the preset identification information. Because a calculation amount of searching for the mapping relationship is far less than that of data processing performed on the Ethernet packet during protocol conversion, compared with an existing in-vehicle gateway, this greatly improves a speed of the in-vehicle gateway in protocol conversion from the Ethernet packet to the CAN packet, and further improves protocol conversion efficiency of the in-vehicle gateway.

### Embodiment 2

FIG. 4 may further be a schematic flowchart according to another embodiment of an in-vehicle gateway communication method of this application. Specifically, conversion from a CAN protocol to an Ethernet protocol may be performed. A first in-vehicle device may be an in-vehicle device that supports the CAN protocol, and a second in-vehicle device may be an in-vehicle device that supports the Ethernet protocol. The method specifically includes the following steps.

S101: The in-vehicle gateway receives a first message from a first in-vehicle device. The first message meets a first communications protocol supported by the first in-vehicle device, is used to indicate a second in-vehicle device to perform a target operation, and includes identification information.

Specifically, the in-vehicle gateway in this embodiment is disposed between the first in-vehicle device and the second in-vehicle device, and is configured to: when the first in-vehicle device and the second in-vehicle device support different communications protocols, perform protocol conversion on the first message that is sent by the first in-vehicle device to the second in-vehicle device through the in-vehicle gateway. The first message meets a CAN communications protocol, the first message may be specifically a CAN packet, and the CAN packet is used to indicate the second in-vehicle device to perform a target operation. In S101, when the first in-vehicle device needs to indicate, through the in-vehicle gateway, the second in-vehicle device to perform the target operation, the first in-vehicle device sends a CAN packet to the in-vehicle gateway, and the in-vehicle gateway receives the CAN packet from the first in-vehicle device. Herein, when the in-vehicle gateway is the gateway switch in FIG. 2, the first message received by the in-vehicle gateway is sent by the first in-vehicle device to a CAN bus, and the in-vehicle gateway receives the first message from the CAN bus corresponding to the first in-vehicle device. Alternatively, when the in-vehicle gateway is the in-vehicle gateway in FIG. 3, the first message may be sent by the first in-vehicle device to the CAN bus, and the in-vehicle gateway receives the first message from the CAN bus connected to the in-vehicle gateway.

In this embodiment, the first message further includes identification information. The identification information is used by the in-vehicle gateway to determine the target operation performed by the second in-vehicle device indicated by the first message, and the identification information may be information included in the first message sent by the first in-vehicle device. The in-vehicle gateway can determine, by using the information in the first message, the target operation performed by the second in-vehicle device indicated by the first message. For example, if the first message is communication data that supports the CAN protocol, namely, a CAN packet, the identification information may be a CAN ID in the CAN packet. The in-vehicle gateway may determine, when the CAN ID in the CAN packet is 1, that the CAN packet is used to indicate the second in-vehicle device to perform a target operation of turning on an air conditioner. Alternatively, the identification information may be information specially added by the first in-vehicle device to the first message used to indicate the second in-vehicle device to perform a target operation, so that the in-vehicle gateway can determine, by using the information added to the first message, the target operation performed by the second in-vehicle device indicated by the first message. For example, when the first message is a CAN packet, the first in-vehicle device may add " 1" to a specific location in the CAN packet, so that the in-vehicle gateway may determine, based on the specific location " 1" in the CAN packet, that the CAN packet is used to indicate the second in-vehicle device to perform a target operation of turning on an air conditioner.

Optionally, the in-vehicle device that supports the Ethernet protocol in this embodiment may support a TSN Ethernet, an AVB Ethernet, and a conventional Ethernet. The in-vehicle device that supports the CAN protocol may support CAN2.0A, CAN2.0B, and CAN-FD protocols.

Optionally, the device that supports the Ethernet protocol in this embodiment includes: a human-machine interface device, a diagnosis interface device, a TBox device, an ADAS controller device, and the like. The device that supports the CAN protocol includes: a power controller, a body controller, a power management controller, a power controller, and the like.

S102: The in-vehicle gateway identifies the identification information in the first message based on the first message obtained in S 101.

Then, in S102, the in-vehicle gateway identifies the identification information included in the first message obtained in S101. In a possible implementation, after receiving the first message, the in-vehicle gateway may parse the first message, to determine the identification information in the first message. For example, if the first message is a CAN packet and the identification information is a CAN ID of the CAN packet, the in-vehicle gateway may determine the CAN ID of the CAN packet by parsing data of data bits in which the CAN ID in the CAN packet is located.

S103: The in-vehicle gateway matches the identification information, in the first message, identified in S102 with preset identification information stored in the in-vehicle gateway.

Subsequently, in S103, the in-vehicle gateway matches the identification information, of the first message, identified in S102 with the preset identification information stored in the in-vehicle gateway. The in-vehicle gateway stores at least one piece of preset identification information, and each piece of preset identification information is used to indicate a target operation performed by a second device indicated by the first message sent by the first in-vehicle device to the in-vehicle gateway. The matching includes: determining whether the identification information of the first message is the same as the preset identification information stored in the in-vehicle gateway, that is, determining whether the preset identification information includes the determined identification information of the first message.

For example, the preset identification information stored in the in-vehicle gateway includes "1" and "2", where "1" is used to indicate that the target operation performed by the second device indicated by the first message is "turning on an air conditioner", and "2" is used to indicate that the target operation performed by the second device indicated by the first message is "turning on a radio". Therefore, if the in-vehicle gateway identifies that the identification information of the first message is "1", because the preset identification information stored in the in-vehicle gateway includes "1", it is determined that the identification information of the first message is successfully matched. However, if the in-vehicle gateway identifies that the identification information of the first message is "0", because the preset identification information stored in the in-vehicle gateway does not include "0", it is determined that the identification information of the first message is not successfully matched.

S104: If the matching succeeds, the in-vehicle gateway sends a second message, where the second message is used to indicate the second in-vehicle device to perform the target operation.

Finally, when the in-vehicle gateway successfully matches the identification information of the first message with the stored preset identification information in S103, the in-vehicle gateway sends the second message in S104, to indicate, by using the second message, the second in-vehicle device to perform the target operation. However, if the in-vehicle gateway fails to match the identification information of the first message with the preset identification information in S103, the in-vehicle gateway does not send the second message in S104, that is, does not indicate, by using the second message, the second in-vehicle device to perform the target operation. The second message is generated by the in-vehicle gateway based on the first message, the second message meets a second communications protocol supported by the second in-vehicle device, and the first communications protocol supported by the first in-vehicle device is different from the second communications protocol supported by the second in-vehicle device.

Specifically, in this embodiment, if the first in-vehicle device is an in-vehicle device that supports a CAN protocol, and the second in-vehicle device is an in-vehicle device that supports an Ethernet protocol, the first message supports the CAN protocol, the second message supports the Ethernet network communication protocol, and the first message may be a CAN packet, and the second message may be an Ethernet packet. In S104, after receiving the CAN packet and determining the Ethernet packet according to the foregoing steps, the in-vehicle gateway may send the Ethernet packet to the switch. The switch sends the Ethernet packet to a corresponding second in-vehicle device based on a destination MAC address of the Ethernet packet, and finally, the second in-vehicle device performs the target operation based on the received Ethernet packet. Herein, the in-vehicle gateway sends the second message. When the in-vehicle gateway is the gateway switch in FIG. 2, after determining an Ethernet packet that needs to be sent to the second in-vehicle device, the in-vehicle gateway directly sends the Ethernet packet to a corresponding second in-vehicle device by using a switching function of the in-vehicle gateway. Alternatively, when the in-vehicle gateway is the in-vehicle gateway in FIG. 3, after determining an Ethernet packet that needs to be sent to the second in-vehicle device, the in-vehicle gateway sends the Ethernet packet to the switch, and the switch sends the Ethernet packet to a corresponding second in-vehicle device. In this embodiment of the present invention, whether the second message is directly sent or indirectly sent is not limited herein.

Therefore, in the in-vehicle gateway communication method in this embodiment, when receiving the first message from the first in-vehicle device, the in-vehicle gateway identifies the identification information in the first message, and matches the identification information with the preset identification information stored in the in-vehicle gateway. When the matching succeeds, the in-vehicle gateway sends the second message, to indicate, by using the second message, the second in-vehicle device to perform the target operation. Therefore, the in-vehicle gateway may filter, based on whether the identification information of the first message is stored, whether the first message can be used by the in-vehicle gateway to control the second in-vehicle device to perform the target operation. When the in-vehicle gateway allows the first message to control, through the in-vehicle gateway, the second in-vehicle device to perform the target operation, the identification information of the first message may be stored as the preset identification information, so that after the first message successfully matches the preset identification information, the in-vehicle gateway sends the second message to control the second in-vehicle device to perform the target operation. When the in-vehicle gateway does not allow the first message to control, through the in-vehicle gateway, the second in-vehicle device to perform the target operation, the identification information of the first message is not stored in the in-vehicle gateway. Therefore, when the identification information in the first message cannot match the preset identification information stored in the gateway, the in-vehicle gateway does not send the second information to control the second in-vehicle device to perform the target operation.

In this case, this embodiment is applied to an in-vehicle network scenario shown in FIG. 1-3. When the first in-vehicle device is an in-vehicle device that supports a CAN protocol, and the second in-vehicle device is an in-vehicle device that supports an Ethernet protocol, a manufacturer or a user of a vehicle may use the preset identification information stored in the in-vehicle gateway, so that after receiving the CAN packet, the in-vehicle gateway sends the Ethernet packet to the second in-vehicle device only when identification information in the CAN packet successfully matches the preset identification information, to control the second in-vehicle device to perform the target operation. Therefore, when the identification information in the CAN packet received by the in-vehicle gateway does not match the preset identification information, it indicates that the CAN packet may be malicious data or the CAN packet may involve a security thread and is not suitable to be sent to the second in-vehicle device that can be connected to the external internet. In this case, the in-vehicle gateway does not convert the CAN packet that fails to match the identification information into the Ethernet packet, and does not send the Ethernet packet to the corresponding second in-vehicle device. In this way, a CAN packet, that is not allowed, sent by the first in-vehicle device cannot be converted into the Ethernet packet through the in-vehicle gateway and cannot be sent to the second in-vehicle device, so that even if the in-vehicle gateway receives a CAN packet used to indicate the second in-vehicle device to perform a target operation, the in-vehicle gateway does not send the Ethernet packet to the second in-vehicle device to enable the second in-vehicle device to perform the target operation. In this way, through matching of the in-vehicle gateway, a risk of controlling the second in-vehicle device by using a malicious CAN packet is reduced, and a risk of leaking the CAN packet to the outside can also be reduced. Therefore, the in-vehicle gateway of the vehicle is used to reduce a security threat to the in-vehicle network, and further to improve security performance of the in-vehicle network.

Further, based on the foregoing embodiment, in a possible specific implementation of S104 in this embodiment, the in-vehicle gateway obtains the second message in a manner of performing protocol conversion on the first message. The gateway converts the first message that uses the first communications protocol into the second message that uses the second communications protocol. For a specific method and a principle of performing protocol conversion by the in-vehicle gateway, refer to the prior art. A protocol conversion manner of the in-vehicle gateway is not limited in this embodiment. It is emphasized that the in-vehicle gateway performs protocol conversion only when the identification information of the first message is successfully matched in S103, and then the in-vehicle gateway performs protocol conversion from the first message to the second message, and sends the second message obtained after the protocol conversion.

Alternatively, in another possible implementation of S104 in this embodiment, to improve a protocol conversion speed of the in-vehicle gateway and to improve protocol conversion efficiency of the in-vehicle gateway, the in-vehicle gateway further stores a mapping relationship used by the in-vehicle gateway to determine the second message, and the mapping relationship includes a mapping relationship between the preset identification information and message construction information. In this case, after successfully matching the identification information in the first message with the preset identification information stored in the in-vehicle gateway in S103, the in-vehicle gateway obtains, from the mapping relationship based on the successfully matched preset identification information, the message construction information corresponding to the preset identification information, and can generate the second message based on the message construction information and the first message. Optionally, the in-vehicle network stores the mapping relationship in a form of a table.

The message construction information includes the second message that can be determined by the in-vehicle gateway by using the first message. In this case, the in-vehicle gateway provided in this embodiment may store, in advance by using the mapping relationship, message construction messages corresponding to different preset identification information. After the gateway successfully matches the preset identification information with the identification information of the first message, the in-vehicle gateway may directly use, as the second message, message construction information that is obtained by searching the mapping relationship based on the successfully matched identification information. In addition, in this embodiment, when the in-vehicle gateway may determine, by using the mapping relationship, the second message obtained after protocol conversion is performed on the first message, and the in-vehicle gateway may no longer perform protocol conversion on the first message. This improves efficiency of determining the second message by the in-vehicle gateway based on the first message.

Alternatively, the message construction information includes a part of information in the second message, and after the in-vehicle gateway in this embodiment successfully matches the identification information of the first message with the preset identification information, the in-vehicle gateway searches the mapping relationship based on the successfully matched identification information of the performance, to obtain the part of message construction information of the second message. Then, the second message is jointly obtained based on the first message and the message construction information, so that a speed and efficiency of performing protocol conversion on the entire first message by the in-vehicle gateway to obtain the second message are also increased to some extent.

With reference to the accompanying drawings, the following describes a manner in which the in-vehicle gateway determines the second message based on the mapping relationship in this embodiment.

FIG. 8 is a schematic flowchart according to an embodiment of an in-vehicle gateway communication method of this application. In an example shown in FIG. 8, a first in-vehicle device is an in-vehicle device that supports a CAN protocol, and a second in-vehicle device is an in-vehicle device that supports an Ethernet protocol. In this case, the first message is a CAN packet, and the second message is an Ethernet packet. The in-vehicle gateway stores a mapping relationship, and the mapping relationship includes a correspondence between preset identification information of the CAN packet and message construction information of the Ethernet packet.

In this embodiment, identification information of the first message is a CAN ID in the CAN packet, where the CAN ID is used to identify a CAN packet on a CAN bus. Specifically, referring to a packet structure of the CAN packet shown in FIG. 7, in this embodiment, a packet identifier in the CAN packet, that is, the CAN ID, may be used as the identification information of the first message, and subsequent matching may be performed on the identification information of the first message. For example, the mapping relationship stored in the in-vehicle gateway includes a correspondence between "CAN ID = Ox100" and "second message construction information", where the second message construction information is used by the in-vehicle gateway to construct an Ethernet packet.

As shown in FIG. 8, after receiving the CAN packet sent by the first in-vehicle device by using the CAN bus, the in-vehicle gateway parses the CAN packet. When parsing that a CAN ID of the CAN packet is equal to Ox100, the in-vehicle gateway determines that the identification information of the CAN packet is successfully matched, and further determines the second message construction information based on the mapping relationship.

Optionally, in the example shown in FIG. 8, if the second message construction information in the mapping relationship stored in the in-vehicle gateway is a preset Ethernet packet, after determining the Ethernet packet based on the mapping relationship, the in-vehicle gateway may send the Ethernet packet to the switch, so that the switch sends the Ethernet packet to a corresponding second in-vehicle device, and finally the second in-vehicle device performs a target operation based on the received Ethernet packet.

Alternatively, in the example shown in FIG. 8, if the second message construction information in the mapping relationship stored in the in-vehicle gateway is a part of information in the Ethernet packet, after determining the second message construction information, the in-vehicle gateway further needs to generate the Ethernet packet based on the second message construction information. For example, referring to a packet format of the Ethernet packet shown in FIG. 6, optionally, in this embodiment, the second message construction information may be data in the Ethernet packet. Therefore, after determining the second message construction information based on the mapping relationship, the in-vehicle gateway further follows the second message construction information to generate the Ethernet packet. In addition, because the data in the Ethernet packet is determined in the second message construction information, the in-vehicle gateway can determine the Ethernet packet only after determining the other part of the Ethernet packet based on the second message construction information. This saves time for the in-vehicle gateway to determine the data in the Ethernet packet.

Further, in the embodiment shown in FIG. 8, for the Ethernet packet determined by the in-vehicle device, when sending the Ethernet packet, the switch may determine a priority of the Ethernet packet based on a specific protocol representation of the Ethernet packet. For an Ethernet packet that has a high real-time requirement and short data, a time-sensitive network (time-sensitive network, TSN) Ethernet network protocol is used to represent. For an Ethernet packet that has high real-time performance and a large amount of data, an audio video bridging (audio video bridging, AVB) Ethernet network protocol is used to represent. For an Ethernet packet that does not have a high real-time requirement, a conventional Ethernet network protocol may be used to represent. Therefore, the second message construction information in the mapping relationship stored in the gateway in this embodiment may include a protocol type of the Ethernet packet. For example, if the first message is a CAN packet used to feed back error information, because the first message needs to be preferentially sent to the second in-vehicle device for processing, after successfully matching identification information of the CAN packet with preset identification information, the in-vehicle gateway determines, based on the mapping relationship, that a protocol type of the Ethernet packet in the construction information corresponding to the preset identification information is the TSN. Finally, the Ethernet packet generated by the in-vehicle gateway based on the message construction information has a relatively high priority because the TSN protocol type is used, and can be preferentially sent to a corresponding Ethernet device by using the switch.

Optionally, because a length of the Ethernet packet is greater than a length of the CAN packet, in the example shown in FIG. 8, after determining that a plurality of CAN packets need to be sent to the second in-vehicle device, the in-vehicle gateway may store the CAN packets in a buffer of the in-vehicle gateway, and after the quantity of CAN packets in the buffer is greater than a preset threshold, the in-vehicle gateway converts all the CAN packets in the buffer into a same Ethernet packet, and sends the Ethernet packet to the second in-vehicle device by using the switch.

Similarly, in the example shown in FIG. 8, an example in which the in-vehicle gateway receives one CAN packet of the first in-vehicle device and sends one Ethernet packet to the second in-vehicle device is used for description. However, in an actual application of the in-vehicle gateway, one CAN packet may be used to indicate a plurality of different second in-vehicle devices to perform respective operations. In this case, in the mapping relationship in the in-vehicle gateway, one piece of preset identification information may be corresponding to a plurality of different message construction information, so that a plurality of Ethernet packets may be determined based on one CAN packet. For example, if the in-vehicle gateway receives a CAN packet sent by the first in-vehicle device and the CAN packet sent by the first in-vehicle device is used to report error information to a human-machine interface and a navigation module at the same time, after receiving the CAN packet and successfully matching identification information of the CAN packet with preset identification information, the in-vehicle gateway determines, based on the mapping relationship, message construction information of the human-machine interface and message construction information of the navigation module that are corresponding to the preset identification information, and determines, based on the message construction information of the human-machine interface, a first Ethernet packet sent to the human-machine interface, and determines, based on the message construction information of the navigation module, a second Ethernet packet to be sent to the navigation module. Then, the in-vehicle gateway sends the first Ethernet packet to the human-machine interface by using the switch, and sends the second Ethernet packet to the navigation module by using the switch, so that one CAN packet is used to indicate the two in-vehicle devices to perform respective operations by using respective Ethernet packets.

In conclusion, in the in-vehicle gateway communication method provided in this embodiment, when determining the Ethernet packet after successfully matching the identification information of the CAN packet with the preset identification information, the in-vehicle gateway can obtain the Ethernet packet by querying the pre-stored mapping relationship, instead of obtaining the Ethernet packet only after protocol conversion is performed based on the CAN packet. In this way, the in-vehicle gateway can directly obtain the Ethernet packet by searching a second mapping relationship based on the preset identification information. Because a calculation amount of searching for the mapping relationship is far less than that of data processing performed on the CAN packet during protocol conversion, compared with an existing in-vehicle gateway, this greatly improves a speed of the in-vehicle gateway in protocol conversion from the CAN packet to the Ethernet packet, and further improves protocol conversion efficiency of the in-vehicle gateway.

It may be understood that for in-vehicle networks inside different vehicles, representation modes of the CAN packet are the same. Therefore, corresponding representation modes of the Ethernet packet outside vehicles are also the same. When the in-vehicle device that supports the CAN protocol sends an Ethernet packet to the in-vehicle device that supports the Ethernet protocol through the in-vehicle gateway, an external attacker may reversely determine a data representation mode on the CAN bus inside the vehicle by using the Ethernet packet. Consequently, security performance of the in-vehicle network is relatively low. However, in the embodiment shown in FIG. 8, the in-vehicle gateway determines, in a manner of determining the Ethernet packet based on the mapping relationship, the Ethernet packet to be sent to the outside of the vehicle. Different vehicles use different data representation modes on the CAN bus. For example, a vehicle 1 uses a CAN packet "1" to indicate a vehicle fault, and an Ethernet packet determined based on corresponding message construction information is "ABC"; and a vehicle 2 uses a CAN packet "2" to indicate that a vehicle fault, and an Ethernet packet determined based on corresponding message construction information is also "ABC". Therefore, even if data representation modes of CAN packets of the two vehicles are different, a same Ethernet packet can still be determined based on same message construction information mapped in the mapping relationship. Even if the external attacker obtains the Ethernet packet "ABC", the attacker cannot reversely determine a data representation mode on the CAN bus inside the vehicle based on the Ethernet packet if the mapping relationship is not determined. This further enhances security performance of the CAN bus of the in-vehicle network.

It should be noted that, the procedure shown in FIG. 5 in Embodiment 1 is that the in-vehicle gateway converts an Ethernet packet into a CAN packet, and the procedure shown in FIG. 8 in Embodiment 2 is that the in-vehicle gateway converts a CAN packet into an Ethernet packet. The foregoing two procedures may be separately implemented by two different in-vehicle gateways. Alternatively, the foregoing two procedures may be implemented by a same in-vehicle gateway, for example, may be implemented by the gateway switch shown in FIG. 2 or the in-vehicle gateway shown in FIG. 3. When an Ethernet packet is received, the procedure shown in FIG. 5 is performed to convert the Ethernet packet into a CAN packet. When a CAN packet is received, the procedure shown in FIG. 8 is performed to convert the CAN packet into an Ethernet packet.

In the embodiments provided in the foregoing embodiments of this application, the methods provided in this application are described and explained from a perspective of the in-vehicle gateway. To implement functions in the methods provided in the embodiments of this application, the in-vehicle gateway may include a hardware structure and/or a software module, and implement the functions in a form of the hardware structure, the software module, or a combination of the hardware structure and the software module. Whether a function in the foregoing functions is performed in a manner of the hardware structure, the software module, or the combination of the hardware structure and the software module depends on particular applications and design constraint of the technical solution.

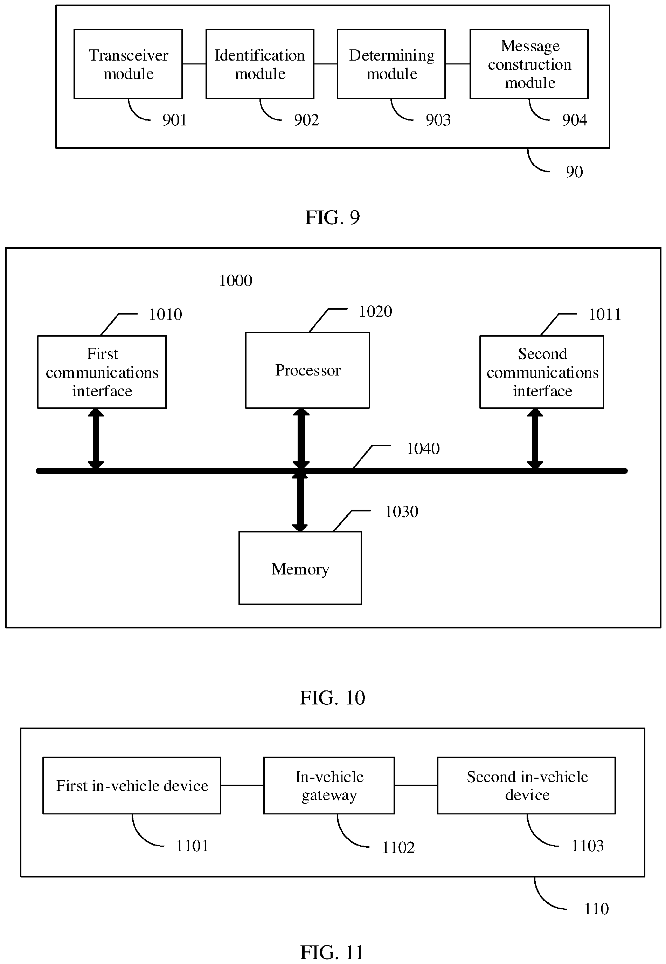

FIG. 9 is a schematic structural diagram according to an embodiment of an in-vehicle gateway of this application. The in-vehicle gateway shown in FIG. 9 may be configured to implement a function of the in-vehicle gateway in the foregoing embodiments of this application. Specifically, the in-vehicle gateway 90 shown in FIG. 9 includes a transceiver module 901, an identification module 902, a determining module 903, and a message construction module 904.

The transceiver module 901 is configured to receive a first message from a first in-vehicle device, where the first message meets a first communications protocol supported by the first in-vehicle device, is used to indicate a second in-vehicle device to perform a target operation, and includes identification information. The identification module 902 is configured to identify the identification information in the first message. The determining module 903 is configured to: match the identification information in the first message and preset identification information stored in the in-vehicle gateway, and determine whether preset identification information that matches the identification information in the first message exists in the preset identification information stored in the in-vehicle gateway, and if the matching succeeds, send a matching result to a message construction module 904. The message construction module 904 is configured to generate a second message based on the matching result sent by the determining module 903, where the second message meets a second communications protocol supported by the second in-vehicle device, and the first communications protocol is different from the second communications protocol. The transceiver module 901 is further configured to send the second message, where the second message is used to indicate the second in-vehicle device to perform a target operation.

The in-vehicle gateway provided in this embodiment may be configured to perform the in-vehicle gateway communication method in the embodiment shown in FIG. 4.

### Embodiment 1

When the first in-vehicle device is an in-vehicle device that supports an Ethernet protocol and the second in-vehicle device is an in-vehicle device that supports a CAN protocol, the first message is an Ethernet packet and the second message is a CAN packet.

A transceiver module 901 is configured to receive an Ethernet packet from a first in-vehicle device.

An identification module 902 is configured to determine identification information of the Ethernet protocol. The identification information of the Ethernet protocol includes one or more of the following: a predefined flag bit in a source MAC address, a predefined flag bit in a destination MAC address, and/or a predefined flag bit in a protocol type, which are in the Ethernet packet.

A determining module 903 is configured to: match the identification information in the Ethernet packet and preset identification information stored in the in-vehicle gateway, and if the matching succeeds, send a matching result to a message construction module 904.

The message construction module 904 is specifically configured to generate a CAN packet based on the matching result sent by the determining module, and send the CAN packet to a CAN bus on which the second in-vehicle device is located, so that the second in-vehicle device performs a target operation after receiving the CAN packet by using the CAN bus.

Optionally, when the matching succeeds, the determining module 903 may send a matching result indicating that the matching succeeds to the message construction module 904, so that the message construction module 904 generates the CAN packet based on the matching result. When the matching fails, the determining module 903 may also send a matching result indicating that the matching fails to the message construction module 904, and the message construction module 904 does not perform an operation of generating the CAN packet based on the matching result indicating that the matching fails.

Optionally, in the foregoing embodiment, the determining module 903 is specifically configured to match, by searching whether the preset identification information stored in the in-vehicle gateway includes the identification information of the first message, the identification information of the first message with the preset identification information stored in the in-vehicle gateway, where the in-vehicle gateway stores at least one piece of the preset identification information.

Optionally, in the foregoing embodiment, the in-vehicle gateway stores a first mapping relationship, and the first mapping relationship is a mapping relationship between the preset identification information and message construction information. The message construction module 904 is specifically configured to: if the matching the identification information in the first message with the preset identification information stored in the in-vehicle gateway succeeds, obtain corresponding message construction information based on the successfully matched preset identification information; and generate the second message by using the message construction information.

Optionally, in the foregoing embodiment, if the first in-vehicle device is an in-vehicle device that supports an Ethernet protocol and the second in-vehicle device is an in-vehicle device that supports a CAN protocol, the message construction information includes a CAN ID of the CAN packet. In other words, the message construction module 904 specifically generates the CAN packet based on the CAN ID in the message construction information.

### Embodiment 2

When the first in-vehicle device is an in-vehicle device that supports a CAN protocol and the second in-vehicle device is an in-vehicle device that supports an Ethernet protocol, the first message is a CAN packet and the second message is an Ethernet packet.

A transceiver module 901 is configured to receive a CAN packet from a first in-vehicle device.

An identification module 902 determines identification information of the CAN protocol. The identification information of the CAN protocol includes a CAN ID of the CAN packet.

A determining module 903 is configured to: match the identification information in the CAN packet and preset identification information stored in the in-vehicle gateway, and if the matching succeeds, send a matching result to a message construction module 904.

The message construction module 904 is specifically configured to generate an Ethernet packet based on the matching result sent by the determining module, and send the Ethernet packet to the second in-vehicle device or send the Ethernet packet to the second in-vehicle device by using a switch, so that the second in-vehicle device performs a target operation by using the received Ethernet packet.

Optionally, when the matching succeeds, the determining module 903 may send a matching result indicating that the matching succeeds to the message construction module 904, so that the message construction module 904 generates the Ethernet packet based on the matching result. When the matching fails, the determining module 903 may also send a matching result indicating that the matching fails to the message construction module 904, and the message construction module 904 does not perform an operation of generating the Ethernet packet based on the matching result indicating that the matching fails.

Optionally, in the foregoing embodiment, the determining module 903 is specifically configured to match, by searching whether the preset identification information stored in the in-vehicle gateway includes the identification information of the first message, the identification information of the first message with the preset identification information stored in the in-vehicle gateway, where the in-vehicle gateway stores at least one piece of the preset identification information.

Optionally, in the foregoing embodiment, the in-vehicle gateway stores a first mapping relationship, and the first mapping relationship is a mapping relationship between the preset identification information and message construction information. The message construction module 904 is further configured to: if the matching the identification information in the first message with the preset identification information stored in the in-vehicle gateway succeeds, obtain corresponding message construction information based on the successfully matched preset identification information; and generate the second message by using the message construction information.

Optionally, in the foregoing embodiment, the message construction information includes one or more of the following: a protocol type of the Ethernet packet, a predefined flag in a source MAC address and a destination MAC address in the Ethernet packet.

The in-vehicle gateway provided in the foregoing embodiments may be configured to perform the in-vehicle gateway communication method in the foregoing embodiments of this application. An implementation and a principle of the in-vehicle gateway communication method are the same as those of the in-vehicle gateway communication method in the foregoing embodiments of this application. Details are not described again.

Division into modules in this embodiment of this application is an example, is merely logical function division, and may be other division in actual implementation. In addition, functional modules in embodiments of this application may be integrated into one processor, or each of the modules may exist alone physically, or two or more modules are integrated into one module. The integrated module may be implemented in a form of hardware, or may be implemented in a form of a software functional module.

FIG. 10 is a schematic structural diagram according to an embodiment of an in-vehicle gateway of this application. The in-vehicle gateway shown in FIG. 10 may be configured to implement a function of the in-vehicle gateway in the foregoing in-vehicle gateway communication method. The in-vehicle gateway 1000 includes a first communications interface 1010, a second communications interface 1011, a processor 1020, and a memory 1030. The first communications interface 1010 may be a transceiver, a circuit, a bus, or an interface in another form, and is configured to communicate with another device by using a transmission medium. The second communications interface 1011 may be a transceiver, a circuit, a bus, or an interface in another form, and is configured to communicate with another device by using a transmission medium. The first communications interface 1010, the second communications interface 1011, the processor 1020, and the memory 1030 are coupled. Couplings in the embodiments of this application are indirect couplings or communication connections between apparatuses, units, or modules, and may be implemented in electronic, mechanical, or other forms, and are used for information exchange between the apparatuses, the units, or the modules.

A specific connection medium between the first communications interface 1010, the second communications interface 1011, the processor 1020, and the memory 1030 is not limited in this embodiment of this application. In this embodiment of this application, in FIG. 10, the first communications interface 1010, the second communications interface 1011, the memory 1030, and the processor 1020 are connected by using a bus 1040. The bus is represented by using a bold line in FIG. 10. A manner of connection between other components is merely an example for description, and constitutes no limitation. The bus may be classified into an address bus, a data bus, a control bus, and the like. For ease of representation, only one thick line is used to represent the bus in FIG. 10, but this does not mean that there is only one bus or only one type of bus.

For example, in the in-vehicle gateway shown in FIG. 10, the first communications interface 1010 is configured to: receive a first message from a first in-vehicle device, and send the first message to the processor 1020, where the first message meets a first communications protocol supported by the first in-vehicle device, and is used to indicate a second in-vehicle device to perform a target operation. The memory 1030 stores an instruction, and when the processor 1020 invokes and executes the instruction, the processor 1020 is enabled to: after receiving the first message from the first communications interface 1010, identify identification information in the first message, and match the identification information in the first message with preset identification information stored in the in-vehicle gateway, determine whether preset identification information that matches the identification information in the first message exists in the preset identification information stored in the in-vehicle gateway, and generate a second message based on a matching result. The processor 1020 is further configured to send the second message to the second communications interface 1011. The second communications interface 1011 is further configured to send the second message, where the second message is used to indicate the second in-vehicle device to perform a target operation.

Optionally, in the embodiment shown in FIG. 10, the first communications interface 1010 may be an interface used by the in-vehicle gateway 1000 to communicate with the first in-vehicle device, and the second communications interface 1011 may be an interface used by the in-vehicle gateway 1000 to communicate with the second in-vehicle device. The first communications interface 1010 and the second communications interface 1011 may be different communications interfaces in the in-vehicle gateway 1000, or the first communications interface 1010 and the second communications interface 1011 may be a same communications interface in the in-vehicle gateway 1000. This is not limited in this application.

For example, if the first in-vehicle device is an in-vehicle device that supports a CAN protocol and the second in-vehicle device is an in-vehicle device that supports an Ethernet protocol, the first message is a CAN packet and the second message is an Ethernet packet. In the in-vehicle gateway shown in FIG. 10, the first communications interface 1010 may be configured to: receive, from a CAN bus, a CAN packet sent by the first in-vehicle device, and send the CAN packet to the processor 1020. After receiving the CAN packet from the first communications interface 1010, the processor 1020 identifies identification information in the CAN packet, and matches the identification information in the CAN packet with preset identification information stored in the in-vehicle gateway, determines whether preset identification information that matches the identification information in the CAN packet exists in the preset identification information stored in the in-vehicle gateway, and generates an Ethernet packet based on a matching result. The processor 1020 is further configured to send the Ethernet packet to the second communications interface 1011. The second communications interface 1011 is further configured to send the Ethernet packet to a switch, so that the switch sends the Ethernet packet to a corresponding second in-vehicle device, where the Ethernet packet is used to indicate the second in-vehicle device to perform a target operation.

For another example, if the first in-vehicle device is an in-vehicle device that supports an Ethernet protocol and the second in-vehicle device is an in-vehicle device that supports a CAN protocol, the first message is an Ethernet packet and the second message is a CAN packet. In the in-vehicle gateway shown in FIG. 10, the first communications interface 1010 may be configured to: receive, from a switch, an Ethernet packet sent by the first in-vehicle device, and send the Ethernet packet to the processor 1020. After receiving the Ethernet packet from the first communications interface 1010, the processor 1020 identifies identification information in the Ethernet packet, and matches the identification information in the Ethernet packet with preset identification information stored in the in-vehicle gateway, determines whether preset identification information that matches the identification information in the Ethernet packet exists in the preset identification information stored in the in-vehicle gateway, and generates a CAN packet based on a matching result. The processor 1020 is further configured to send the CAN packet to the second communications interface 1011. The second communications interface 1011 is configured to send the CAN packet to a CAN bus, where the CAN packet is used to indicate the second in-vehicle device to perform a target operation.

For specific content of the first message and the second message, refer to detailed descriptions in the method example. Details are not described herein again. Alternatively, for example, the processor 1020 may further be configured to: obtain corresponding message construction information based on the successfully matched preset identification information, and generate the second message by using the message construction information. For details, refer to detailed descriptions in the method example. Details are not described herein again.

In the embodiments of this application, the processor may be a general processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in the embodiments of this application. The general purpose processor may be a microprocessor or any conventional processor or the like. The steps of the method disclosed with reference to the embodiments of this application may be directly performed by a hardware processor, or may be performed by using a combination of hardware in the processor and a software module.

In this embodiment of this application, the memory may be a non-volatile memory, such as a hard disk drive (hard disk drive, HDD) or a solid-state drive (solid-state drive, SSD), or may be a volatile memory (volatile memory), such as a random-access memory (random access memory, RAM). The memory is any other medium that can be configured to carry or store expected program code in a form of an instruction or a data structure and that can be accessed by a computer. However, the memory is not limited thereto. The memory in the embodiments of this application may alternatively be a circuit or any other apparatus that can implement a storage function, and is configured to store a program instruction and/or data.

FIG. 11 is a schematic structural diagram according to an embodiment of an intelligent vehicle of this application. As shown in FIG. 11, the intelligent vehicle 110 provided in this embodiment includes a first in-vehicle device 1101, a second in-vehicle device 1103, and the in-vehicle gateway 1102 according to any embodiment in FIG. 9. The first in-vehicle device 1101 is configured to send a first message to the in-vehicle gateway 1102, where the first message meets a first communications protocol supported by the first in-vehicle device 1101, the first message is used to indicate a second in-vehicle device 1103 to perform a target operation, and the first message includes identification information. The in-vehicle gateway 1102 is configured to: receive the first message from the first in-vehicle device 1101, and identify the identification information in the first message. The in-vehicle gateway 1102 is further configured to match the identification information in the first message with preset identification information stored in the in-vehicle gateway 1102. If the matching succeeds, the in-vehicle gateway 1102 sends a second message, where the second message is used to indicate the second in-vehicle device 1103 to perform a target operation, is generated based on the first message, and meets a second communications protocol supported by the second in-vehicle device 1103, and the first communications protocol is different from the second communications protocol. For details, refer to detailed descriptions in the method example. Details are not described herein again.

Optionally, in the foregoing embodiment, if the first in-vehicle device 1101 is an in-vehicle device that supports a CAN protocol and the second in-vehicle device 1103 is an in-vehicle device that supports an Ethernet protocol, the first message is a CAN packet and the second message is an Ethernet packet.

The first in-vehicle device 1101 sends the Ethernet packet to the in-vehicle gateway 1102. The first in-vehicle device 1101 may directly send the Ethernet packet to the in-vehicle gateway 1102, or send the Ethernet packet to the in-vehicle gateway 1102 by using a switch. After receiving the Ethernet packet sent by the first in-vehicle device 1101, the in-vehicle gateway 1102 matches identification information in the Ethernet packet, and generates the CAN packet when the matching succeeds. The in-vehicle gateway 1102 sends the generated CAN packet to a CAN bus on which the second in-vehicle device 1103 is located, so that after receiving, from the CAN bus, the CAN packet sent by the in-vehicle gateway 1102, the second in-vehicle device 1103 performs a target operation based on the CAN packet.

Optionally, in the foregoing embodiment, the in-vehicle gateway 1102 is specifically configured to match, by searching whether the preset identification information stored in the gateway includes the identification information of the first message, the identification information of the first message with the preset identification information stored in the gateway, where the in-vehicle gateway stores at least one piece of the preset identification information. The identification information includes one or more of the following: a predefined flag bit in a source MAC address, a predefined flag bit in a destination MAC address, and/or a predefined flag bit in a protocol type, which are in the Ethernet packet.

Optionally, in the foregoing embodiment, the in-vehicle gateway 1102 stores a first mapping relationship, and the first mapping relationship is a mapping relationship between the preset identification information and message construction information. The in-vehicle gateway 1102 is specifically configured to: if the matching the identification information in the first message with the preset identification information stored in the in-vehicle gateway 1102 succeeds, obtain corresponding message construction information based on the successfully matched preset identification information; and generate the second message by using the message construction information and the first message. The message construction information includes a CAN ID of the CAN packet.

Alternatively, if the first in-vehicle device 1101 is an in-vehicle device that supports an Ethernet protocol and the second in-vehicle device 1103 is an in-vehicle device that supports a CAN protocol, the first message is an Ethernet packet and the second message is a CAN packet.

In this case, the first in-vehicle device 1101 sends the CAN packet to the CAN bus. After receiving the CAN packet sent by the first in-vehicle device 1101 by using the CAN bus, the in-vehicle gateway 1102 matches identification information in the CAN packet, and generates the Ethernet packet when the matching succeeds. The in-vehicle gateway 1102 sends the Ethernet packet to the second in-vehicle device 1103. The in-vehicle gateway may directly send the Ethernet packet to the second in-vehicle device 1103, or send the Ethernet packet to the in-vehicle gateway 1103 by using a switch, so that the second in-vehicle device 1103 performs a target operation based on the received Ethernet packet.

Optionally, in the foregoing embodiment, the in-vehicle gateway 1102 is specifically configured to match, by searching whether the preset identification information stored in the gateway includes the identification information of the first message, the identification information of the first message with the preset identification information stored in the gateway, where the in-vehicle gateway stores at least one piece of the preset identification information. The identification information includes a CAN ID of the CAN packet.

Optionally, in the foregoing embodiment, the in-vehicle gateway 1102 stores a first mapping relationship, and the first mapping relationship is a mapping relationship between the preset identification information and message construction information. The in-vehicle gateway 1102 is specifically configured to: if the matching the identification information in the first message with the preset identification information stored in the in-vehicle gateway 1102 succeeds, obtain corresponding message construction information based on the successfully matched preset identification information; and generate the second message by using the message construction information and the first message. The message construction information includes one or more of the following: a protocol type of the Ethernet packet, a predefined flag in a source MAC address and a destination MAC address in the Ethernet packet.

All or some of the foregoing methods in the embodiments of this application may be implemented by means of software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of the present invention are all or partially generated. The computer may be a general-purpose computer, a dedicated computer, a computer network, a network device, a user device, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD for short), a semiconductor medium (for example, an SSD), or the like.

Obviously, a person skilled in the art can make various modifications and variations to this application without departing from the scope of this application. This application is intended to cover these modifications and variations of this application provided that they fall within the scope of protection defined by the following claims.

## Claims

1. An in-vehicle gateway communication method, comprising:
receiving (S101) a first message from a first in-vehicle device, wherein the first message meets a first communications protocol supported by the first in-vehicle device, is used to indicate a second in-vehicle device to perform a target operation, and comprises identification information;
identifying (S102) the identification information in the first message;
matching (S103) the identification information in the first message with preset identification information stored in the in-vehicle gateway; and
if the matching succeeds, sending (S103) a second message, wherein the second message is used to indicate the second in-vehicle device to perform a target operation, is generated based on the first message, and meets a second communications protocol supported by the second in-vehicle device, and the first communications protocol is different from the second communications protocol.

2. The method according to claim 1, wherein
if the first in-vehicle device is an in-vehicle device that supports a CAN protocol and the second in-vehicle device is an in-vehicle device that supports an Ethernet protocol, the first message is a CAN packet and the second message is an Ethernet packet.

3. The method according to claim 1, wherein
if the first in-vehicle device is an in-vehicle device that supports an Ethernet protocol and the second in-vehicle device is an in-vehicle device that supports a CAN protocol, the first message is an Ethernet packet and the second message is a CAN packet.

4. The method according to any one of claims 1 to 3, wherein the matching (S103) the identification information in the first message with preset identification information stored in the in-vehicle gateway comprises:
matching, by searching whether the preset identification information stored in the in-vehicle gateway comprises the identification information of the first message, the identification information of the first message with the preset identification information stored in the in-vehicle gateway, wherein the in-vehicle gateway stores at least one piece of the preset identification information.

5. The method according to claim 4, wherein the first message is an Ethernet packet, and the identification information of the first message comprises one or more of the following:
a predefined flag bit in a source MAC address, a predefined flag bit in a destination MAC address, and a predefined flag bit in a protocol type, which are in the Ethernet packet.

6. The method according to claim 4, wherein the first message is a CAN packet, and the identification information of the first message comprises:
a CAN ID in the CAN packet.

7. The method according to claim 1, wherein if the matching succeeds, the sending (S104) a second message specifically comprises:
the in-vehicle gateway stores a mapping relationship, and the mapping relationship is a mapping relationship between the preset identification information and message construction information;
if the matching the identification information in the first message with the preset identification information stored in the in-vehicle gateway succeeds,
corresponding message construction information is obtained based on the successfully matched preset identification information; and
the second message is generated by using the message construction information.

8. The method according to claim 7, wherein the second message is a CAN packet, and the message construction information comprises:
a CAN ID in the CAN packet.

9. The method according to claim 7, wherein the second message is an Ethernet packet, and the message construction information comprises one or more of the following:
a predefined flag bit in a protocol type of the Ethernet packet, and a predefined flag bit in a source MAC address and a predefined flag bit in a destination MAC address in the Ethernet packet.

10. An in-vehicle gateway (90), comprising:
a transceiver module (901), configured to receive a first message from a first in-vehicle device, wherein the first message meets a first communications protocol supported by the first in-vehicle device, is used to indicate a second in-vehicle device to perform a target operation, and comprises identification information;
an identification module (902), configured to identify the identification information in the first message;
a determining module (903), configured to: match the identification information in the first message and preset identification information stored in the in-vehicle gateway (90), and determine whether preset identification information that matches the identification information in the first message exists in the preset identification information stored in the in-vehicle gateway (90), and if the matching succeeds, send a matching result to a message construction module (904); and
the message construction module (904), configured to generate a second message based on the matching result sent by the determining module (903), wherein the second message meets a second communications protocol supported by the second in-vehicle device, and the first communications protocol is different from the second communications protocol, wherein
the transceiver module (901) is further configured to send the second message, where the second message is used to indicate the second in-vehicle device to perform a target operation.

11. The in-vehicle gateway (90) according to claim 10, wherein
if the first in-vehicle device is an in-vehicle device that supports a CAN protocol and the second in-vehicle device is an in-vehicle device that supports an Ethernet protocol, the first message is a CAN packet and the second message is an Ethernet packet.

12. The in-vehicle gateway (90) according to claim 10, wherein
if the first in-vehicle device is an in-vehicle device that supports an Ethernet protocol and the second in-vehicle device is an in-vehicle device that supports a CAN protocol, the first message is an Ethernet packet and the second message is a CAN packet.

13. The in-vehicle gateway (90) according to any one of claims 10 to 12, wherein
the determining module (903) is specifically configured to match, by searching whether the preset identification information stored in the in-vehicle gateway comprises the identification information of the first message, the identification information of the first message with the preset identification information stored in the in-vehicle gateway, wherein the in-vehicle gateway stores at least one piece of the preset identification information.

14. The in-vehicle gateway (90) according to claim 10, wherein the in-vehicle gateway (90) stores a first mapping relationship, and the first mapping relationship is a mapping relationship between the preset identification information and message construction information; and
the message construction module (904) is further configured to: if the matching the identification information in the first message with the preset identification information stored in the in-vehicle gateway (90) succeeds,
obtain corresponding message construction information based on the successfully matched preset identification information; and
generate the second message by using the message construction information.

15. An intelligent vehicle (110), comprising a first in-vehicle device (1101), a second in-vehicle device(1103), and an in-vehicle gateway (1102), wherein
the first in-vehicle device (1101) is configured to send a first message to the in-vehicle gateway (1102), wherein the first message meets a first communications protocol supported by the first in-vehicle device (1101), is used to indicate a second in-vehicle device (1103) to perform a target operation, and comprises identification information;
the in-vehicle gateway (1102) is configured to: receive the first message from the first in-vehicle device (1101), and identify the identification information in the first message; and
the in-vehicle gateway (1102) is further configured to match the identification information in the first message with preset identification information stored in the in-vehicle gateway (1102); and if the matching succeeds, send a second message, wherein the second message is used to indicate the second in-vehicle device (1103) to perform a target operation, is generated based on the first message, and meets a second communications protocol supported by the second in-vehicle device (1103), and the first communications protocol is different from the second communications protocol.

16. The intelligent vehicle (110) according to claim 15, wherein
if the first in-vehicle device (1101) is an in-vehicle device that supports a CAN protocol and the second in-vehicle device (1103) is an in-vehicle device that supports an Ethernet protocol, the first message is a CAN packet and the second message is an Ethernet packet.

17. The intelligent vehicle (1101) according to claim 15, wherein
if the first in-vehicle device (1101) is an in-vehicle device that supports an Ethernet protocol and the second in-vehicle device (1103) is an in-vehicle device that supports a CAN protocol, the first message is an Ethernet packet and the second message is a CAN packet.

18. The intelligent vehicle (110) according to any one of claims 15 to 17, wherein the in-vehicle gateway (1102) is specifically configured to:
matching, by searching whether the preset identification information stored in the gateway comprises the identification information of the first message, the identification information of the first message with the preset identification information stored in the gateway, wherein the gateway (1102) stores at least one piece of the preset identification information.

19. The intelligent vehicle (110) according to claim 15, wherein the in-vehicle gateway (1102) stores a first mapping relationship, and the first mapping relationship is a mapping relationship between the preset identification information and message construction information; and
the in-vehicle gateway (1102) is specifically configured to: if the matching the identification information in the first message with the preset identification information stored in the in-vehicle gateway (1102) succeeds, obtain corresponding message construction information based on the successfully matched preset identification information; and generate the second message by using the message construction information.

## Patentansprüche

1. Fahrzeuginternes-Gateway-Kommunikationsverfahren, das umfasst:
Empfangen (S101) einer ersten Nachricht von einer ersten fahrzeuginternen Vorrichtung, wobei die erste Nachricht mit einem ersten Kommunikationsprotokoll, das durch die erste fahrzeuginterne Vorrichtung unterstützt wird, übereinstimmt, verwendet wird, um einer zweiten fahrzeuginterne Vorrichtung anzugeben, eine Zieloperation durchzuführen, und Identifikationsinformationen umfasst;
Identifizieren (S102) der Identifikationsinformationen in der ersten Nachricht;
Abgleichen (S103) der Identifikationsinformationen in der ersten Nachricht mit voreingestellten Identifikationsinformationen, die in dem fahrzeuginternen Gateway gespeichert sind; und
falls das Abgleichen erfolgreich ist, Senden (S103) einer zweiten Nachricht, wobei die zweite Nachricht verwendet wird, um der zweiten fahrzeuginternen Vorrichtung anzugeben, eine Zieloperation durchzuführen, erzeugt wird, basierend auf der ersten Nachricht, und mit einem zweiten Kommunikationsprotokoll, das durch die zweite fahrzeuginterne Vorrichtung unterstützt wird, übereinstimmt, und wobei sich das erste Kommunikationsprotokoll von dem zweiten Kommunikationsprotokoll unterscheidet.

2. Verfahren nach Anspruch 1, wobei
falls die erste fahrzeuginterne Vorrichtung eine fahrzeuginterne Vorrichtung ist, die ein CAN-Protokoll unterstützt, und die zweite fahrzeuginterne Vorrichtung eine fahrzeuginterne Vorrichtung ist, die ein Ethernet-Protokoll unterstützt, die erste Nachricht ein CAN-Paket ist, und die zweite Nachricht ein Ethernet-Paket ist.

3. Verfahren nach Anspruch 1, wobei
falls die erste fahrzeuginterne Vorrichtung eine fahrzeuginterne Vorrichtung ist, die ein Ethernet-Protokoll unterstützt, und die zweite fahrzeuginterne Vorrichtung eine fahrzeuginterne Vorrichtung ist, die ein CAN-Protokoll unterstützt, die erste Nachricht ein Ethernet-Paket ist und die zweite Nachricht ein CAN-Paket ist.

4. Verfahren nach einem der Ansprüche 1 bis 3, wobei das Abgleichen (S103) der Identifikationsinformationen in der ersten Nachricht mit voreingestellten Identifikationsinformationen, die in dem fahrzeuginternen Gateway gespeichert sind, umfasst:
Abgleichen, durch Suchen, ob die voreingestellten Identifikationsinformationen, die in dem fahrzeuginternen Gateway gespeichert sind, die Identifikationsinformationen der ersten Nachricht, die Identifikationsinformationen der ersten Nachricht mit den voreingestellten Identifikationsinformationen, die in dem fahrzeuginternen Gateway gespeichert sind, umfassen, wobei das fahrzeuginterne Gateway mindestens einen Anteil der voreingestellten Identifikationsinformationen speichert.

5. Verfahren nach Anspruch 4, wobei die erste Nachricht ein Ethernet-Paket ist und die Identifikationsinformationen der ersten Nachricht eines oder mehrere des Folgenden umfassen:
ein vordefiniertes Flag-Bit in einer Quell-MAC-Adresse, ein vordefiniertes Flag-Bit in einer Ziel-MAC-Adresse und ein vordefiniertes Flag-Bit in einer Protokollart, die in dem Ethernet-Paket sind.

6. Verfahren nach Anspruch 4, wobei die erste Nachricht ein CAN-Paket ist und die Identifikationsinformationen der ersten Nachricht umfassen:
eine CAN-ID in dem CAN-Paket.

7. Verfahren nach Anspruch 1, wobei, falls das Abgleichen erfolgreich ist, das Senden (S104) einer zweiten Nachricht speziell umfasst:
dass das fahrzeuginterne Gateway eine Zuordnungsbeziehung speichert und die Zuordnungsbeziehung eine Zuordnungsbeziehung zwischen den voreingestellten Identifikationsinformationen und den Nachrichtenaufbauinformationen ist;
falls das Abgleichen der Identifikationsinformationen in der ersten Nachricht mit den voreingestellten Identifikationsinformationen, die in dem fahrzeuginternen Gateway gespeichert sind, erfolgreich ist,
entsprechende Nachrichtenaufbauinformationen basierend auf den erfolgreich abgeglichenen voreingestellten Identifikationsinformationen erhalten werden; und
die zweite Nachricht unter Verwendung der Nachrichtenaufbauinformationen erzeugt wird.

8. Verfahren nach Anspruch 7, wobei die zweite Nachricht ein CAN-Paket ist, und die Nachrichtenaufbauinformationen umfassen:
eine CAN-ID in dem CAN-Paket.

9. Verfahren nach Anspruch 7, wobei die zweite Nachricht ein Ethernet-Paket ist und die Nachrichtenaufbauinformationen eines oder mehrere des Folgenden umfassen:
ein vordefiniertes Flag-Bit in einer Protokollart des Ethernet-Pakets und ein vordefiniertes Flag-Bit in einer Quell-MAC-Adresse und ein vordefiniertes Flag-Bit in einer Ziel-MAC-Adresse in dem Ethernet-Paket.

10. Fahrzeuginternes Gateway (90), das umfasst:
ein Sendeempfänger-Modul (901), das konfiguriert ist, um eine erste Nachricht von einer ersten fahrzeuginternen Vorrichtung zu empfangen, wobei die erste Nachricht mit einem ersten Kommunikationsprotokoll, das durch die erste fahrzeuginterne Vorrichtung unterstützt wird, übereinstimmt, verwendet wird, um einer zweiten fahrzeuginternen Vorrichtung anzugeben, eine Zieloperation durchzuführen, und Identifikationsinformationen umfasst;
ein Identifikationsmodul (902), das konfiguriert ist, um die Identifikationsinformationen in der ersten Nachricht zu identifizieren;
ein Bestimmungsmodul (903), das konfiguriert ist, zum: Abgleichen der Identifikationsinformationen in der ersten Nachricht und voreingestellten Identifikationsinformationen, die in dem fahrzeuginternen Gateway (90) gespeichert sind, und Bestimmten, ob voreingestellte Identifikationsinformationen, die sich mit den Identifikationsinformationen in der ersten Nachricht abgleichen, in den voreingestellten Identifikationsinformationen, die in dem fahrzeuginternen Gateway (90) gespeichert sind, vorhanden sind, und falls das Abgleichen erfolgreich ist, Senden eines Abgleichsergebnisses an ein Nachrichtenaufbaumodul (904); und
wobei das Nachrichtenaufbaumodul (904), konfiguriert ist, um eine zweite Nachricht basierend auf dem Abgleichsergebnis, das durch das Bestimmungsmodul (903) gesendet wird, zu erzeugen, wobei die zweite Nachricht mit einem zweiten Kommunikationsprotokoll, das durch die zweite fahrzeuginternen Vorrichtung unterstützt wird, übereinstimmt, und das erste Kommunikationsprotokoll sich von dem zweiten Kommunikationsprotokoll unterscheidet, wobei
das Sendeempfänger-Modul (901) ferner konfiguriert ist, um die zweite Nachricht zu senden, wobei die zweite Nachricht verwendet wird, um der zweiten fahrzeuginternen Vorrichtung anzugeben, eine Zieloperation durchzuführen.

11. Fahrzeuginternes Gateway (90) nach Anspruch 10, wobei
falls die erste fahrzeuginterne Vorrichtung eine fahrzeuginterne Vorrichtung ist, die ein CAN-Protokoll unterstützt, und die zweite fahrzeuginterne Vorrichtung eine fahrzeuginterne Vorrichtung ist, die ein Ethernet-Protokoll unterstützt, die erste Nachricht ein CAN-Paket ist, und die zweite Nachricht ein Ethernet-Paket ist.

12. Fahrzeuginternes Gateway (90) nach Anspruch 10, wobei
falls die erste fahrzeuginterne Vorrichtung eine fahrzeuginterne Vorrichtung ist, die ein Ethernet-Protokoll unterstützt, und die zweite fahrzeuginterne Vorrichtung eine fahrzeuginterne Vorrichtung ist, die ein CAN-Protokoll unterstützt, die erste Nachricht ein Ethernet-Paket ist und die zweite Nachricht ein CAN-Paket ist.

13. Fahrzeuginternes Gateway (90) nach einem der Ansprüche 10 bis 12, wobei
das Bestimmungsmodul (903) speziell konfiguriert ist, um abzugleichen, durch Suchen, ob die voreingestellten Identifikationsinformationen, die in dem fahrzeuginternen Gateway gespeichert sind, die Identifikationsinformationen der ersten Nachricht, die Identifikationsinformationen der ersten Nachricht mit den voreingestellten Identifikationsinformationen, die in dem fahrzeuginternen Gateway gespeichert sind, umfassen, wobei das fahrzeuginterne Gateway mindestens einen Anteil der voreingestellten Identifikationsinformationen speichert.

14. Fahrzeuginternes Gateway (90) nach Anspruch 10, wobei das fahrzeuginterne Gateway (90) eine erste Zuordnungsbeziehung speichert und die erste Zuordnungsbeziehung eine Zuordnungsbeziehung zwischen den voreingestellten Identifikationsinformationen und den Nachrichtenaufbauinformationen ist; und
das Nachrichtenaufbaumodul (904) ferner für Folgendes konfiguriert ist zum: falls das Abgleichen der Identifikationsinformationen in der ersten Nachricht mit den voreingestellten Identifikationsinformationen, die in dem fahrzeuginternen Gateway (90) gespeichert sind, erfolgreich ist,
Erhalten von entsprechenden Nachrichtenaufbauinformationen basierend auf den erfolgreich abgeglichenen voreingestellten Identifikationsinformationen; und
Erzeugen der zweiten Nachricht unter Verwendung der Nachrichtenaufbauinformationen.

15. Intelligentes Fahrzeug (110), das eine erste fahrzeuginterne Vorrichtung (1101), eine zweite fahrzeuginterne Vorrichtung (1103) und ein fahrzeuginternes Gateway (1102) umfasst, wobei
die erste fahrzeuginterne Vorrichtung (1101) konfiguriert ist, um eine erste Nachricht an das fahrzeuginterne Gateway (1102) zu senden, wobei die erste Nachricht mit einem ersten Kommunikationsprotokoll, das durch die erste fahrzeuginternen Vorrichtung (1101) unterstützt wird, übereinstimmt, verwendet wird, um einer zweiten fahrzeuginternen Vorrichtung (1103) anzugeben, eine Zieloperation durchzuführen, und Identifikationsinformationen umfasst;
wobei das fahrzeuginterne Gateway (1102) konfiguriert ist, zum: Empfangen der ersten Nachricht von der ersten fahrzeuginternen Vorrichtung (1101) und Identifizieren der Identifikationsinformationen in der ersten Nachricht; und
das fahrzeuginterne Gateway (1102) ferner konfiguriert ist, um die Identifikationsinformationen in der ersten Nachricht mit voreingestellten Identifikationsinformationen abzugleichen, die in dem fahrzeuginternen Gateway (1102) gespeichert sind; und falls das Abgleichen erfolgreich ist, Senden einer zweiten Nachricht, wobei die zweite Nachricht verwendet wird, um der zweiten fahrzeuginternen Vorrichtung (1103) anzugeben, eine Zieloperation durchzuführen, erzeugt wird, basierend auf der ersten Nachricht, und mit einem zweiten Kommunikationsprotokoll, das durch die zweite fahrzeuginterne Vorrichtung (1103) unterstützt wird, übereinstimmt, und wobei sich das erste Kommunikationsprotokoll von dem zweiten Kommunikationsprotokoll unterscheidet.

16. Intelligentes Fahrzeug (110) nach Anspruch 15, wobei
falls die erste fahrzeuginterne Vorrichtung (1101) eine fahrzeuginterne Vorrichtung ist, die ein CAN-Protokoll unterstützt, und die zweite fahrzeuginterne Vorrichtung (1103) eine fahrzeuginterne Vorrichtung ist, die ein Ethernet-Protokoll unterstützt, die erste Nachricht ein CAN-Paket ist, und die zweite Nachricht ein Ethernet-Paket ist.

17. Intelligentes Fahrzeug (1101) nach Anspruch 15, wobei
falls die erste fahrzeuginterne Vorrichtung (1101) eine fahrzeuginterne Vorrichtung ist, die ein Ethernet-Protokoll unterstützt, und die zweite fahrzeuginterne Vorrichtung (1103) eine fahrzeuginterne Vorrichtung ist, die ein CAN-Protokoll unterstützt, die erste Nachricht ein Ethernet-Paket und die zweite Nachricht ein CAN-Paket ist.

18. Intelligentes Fahrzeug (110) nach einem der Ansprüche 15 bis 17, wobei das fahrzeuginterne Gateway (1102) speziell konfiguriert ist zum:
Abgleichen, durch Suchen, ob die voreingestellten Identifikationsinformationen, die in dem fahrzeuginternen Gateway gespeichert sind, die Identifikationsinformationen der ersten Nachricht, die Identifikationsinformationen der ersten Nachricht mit den voreingestellten Identifikationsinformationen, die in dem fahrzeuginternen Gateway gespeichert sind, umfassen, wobei das fahrzeuginterne Gateway (1102) mindestens einen Anteil der voreingestellten Identifikationsinformationen speichert.

19. Intelligentes Fahrzeug (110) nach Anspruch 15, wobei das fahrzeuginterne Gateway (1102) eine erste Zuordnungsbeziehung speichert und die erste Zuordnungsbeziehung eine Zuordnungsbeziehung zwischen den voreingestellten Identifikationsinformationen und den Nachrichtenaufbauinformationen ist; und
das fahrzeuginterne Gateway (1102) speziell konfiguriert ist zum: falls das Abgleichen der Identifikationsinformationen in der ersten Nachricht mit den voreingestellten Identifikationsinformationen, die in dem fahrzeuginternen Gateway (1102) gespeichert sind, erfolgreich ist, Erhalten entsprechender Nachrichtenaufbauinformationen basierend auf den erfolgreich abgeglichenen voreingestellten Identifikationsinformationen; und Erzeugen der zweiten Nachricht unter Verwendung der Nachrichtenaufbauinformationen.

## Revendications

1. Procédé de communication de passerelle embarquée, comprenant :
la réception (S101) d'un premier message à partir d'un premier dispositif embarqué, dans lequel le premier message satisfait à un premier protocole de communication pris en charge par le premier dispositif embarqué, est utilisé pour indiquer à un second dispositif embarqué d'effectuer une opération cible, et comprend des informations d'identification ;
l'identification (S102) des informations d'identification dans le premier message ;
la mise en correspondance (S103) des informations d'identification dans le premier message avec des informations d'identification prédéfinies stockées dans la passerelle embarquée ; et
si la mise en correspondance réussit, l'envoi (S103) d'un second message, dans lequel le second message est utilisé pour indiquer au second dispositif embarqué d'effectuer une opération cible, est généré sur la base du premier message, et satisfait à un second protocole de communication pris en charge par le second dispositif embarqué, et le premier protocole de communication est différent du second protocole de communication.

2. Procédé selon la revendication 1, dans lequel
si le premier dispositif embarqué est un dispositif embarqué qui prend en charge un protocole CAN et que le second dispositif embarqué est un dispositif embarqué qui prend en charge un protocole Ethernet, le premier message est un paquet CAN et le second message est un paquet Ethernet.

3. Procédé selon la revendication 1, dans lequel
si le premier dispositif embarqué est un dispositif embarqué qui prend en charge un protocole Ethernet et que le second dispositif embarqué est un dispositif embarqué qui prend en charge un protocole CAN, le premier message est un paquet Ethernet et le second message est un paquet CAN.

4. Procédé selon l'une quelconque des revendications 1 à 3, dans lequel la mise en correspondance (S103) des informations d'identification dans le premier message avec des informations d'identification prédéfinies stockées dans la passerelle embarquée comprend :
la mise en correspondance, en recherchant si les informations d'identification prédéfinies stockées dans la passerelle embarquée comprennent les informations d'identification du premier message, des informations d'identification du premier message avec les informations d'identification prédéfinies stockées dans la passerelle embarquée, dans lequel la passerelle embarquée stocke au moins un élément des informations d'identification prédéfinies.

5. Procédé selon la revendication 4, dans lequel le premier message est un paquet Ethernet, et les informations d'identification du premier message comprennent un ou plusieurs des éléments suivants :
un bit indicateur prédéfini dans une adresse MAC source, un bit indicateur prédéfini dans une adresse MAC de destination et un bit indicateur prédéfini dans un type de protocole, qui se trouvent dans le paquet Ethernet.

6. Procédé selon la revendication 4, dans lequel le premier message est un paquet CAN, et les informations d'identification du premier message comprennent :
un identifiant CAN dans le paquet CAN.

7. Procédé selon la revendication 1, dans lequel si la mise en correspondance réussit, l'envoi (S104) d'un second message comprend spécifiquement :
la passerelle embarquée stocke une relation de mappage, et la relation de mappage est une relation de mappage entre les informations d'identification prédéfinies et des informations de construction de message ;
si la mise en correspondance des informations d'identification dans le premier message avec les informations d'identification prédéfinies stockées dans la passerelle embarquée réussit,
des informations de construction de message correspondantes sont obtenues sur la base des informations d'identification prédéfinies ayant fait l'objet d'une correspondance réussie ; et
le second message est généré à l'aide des informations de construction de message.

8. Procédé selon la revendication 7, dans lequel le second message est un paquet CAN, et les informations de construction de message comprennent :
un identifiant CAN dans le paquet CAN.

9. Procédé selon la revendication 7, dans lequel le second message est un paquet Ethernet, et les informations de construction de message comprennent un ou plusieurs des éléments suivants :
un bit indicateur prédéfini dans un type de protocole du paquet Ethernet, et un bit indicateur prédéfini dans une adresse MAC source et un bit indicateur prédéfini dans une adresse MAC de destination dans le paquet Ethernet.

10. Passerelle embarquée (90), comprenant :
un module émetteur-récepteur (901), configuré pour recevoir un premier message d'un premier dispositif embarqué, dans laquelle le premier message satisfait à un premier protocole de communication pris en charge par le premier dispositif embarqué, est utilisé pour indiquer à un second dispositif embarqué d'effectuer une opération cible, et comprend des informations d'identification ;
un module d'identification (902), configuré pour identifier les informations d'identification dans le premier message ;
un module de détermination (903), configuré pour : mettre en correspondance les informations d'identification dans le premier message et des informations d'identification prédéfinies stockées dans la passerelle embarquée (90), et déterminer si des informations d'identification prédéfinies qui correspondent aux informations d'identification dans le premier message existent dans les informations d'identification prédéfinies stockées dans la passerelle embarquée (90) et, si la correspondance réussit, envoyer un résultat de correspondance à un module de construction de message (904) ; et
le module de construction de message (904), configuré pour générer un second message sur la base du résultat de correspondance envoyé par le module de détermination (903), dans laquelle le second message satisfait à un second protocole de communication pris en charge par le second dispositif embarqué, et le premier protocole de communication est différent du second protocole de communication, dans laquelle
le module émetteur-récepteur (901) est en outre configuré pour envoyer le second message, où le second message est utilisé pour indiquer au second dispositif embarqué d'effectuer une opération cible.

11. Passerelle embarquée (90) selon la revendication 10, dans laquelle
si le premier dispositif embarqué est un dispositif embarqué qui prend en charge un protocole CAN et que le second dispositif embarqué est un dispositif embarqué qui prend en charge un protocole Ethernet, le premier message est un paquet CAN et le second message est un paquet Ethernet.

12. Passerelle embarquée (90) selon la revendication 10, dans laquelle
si le premier dispositif embarqué est un dispositif embarqué qui prend en charge un protocole Ethernet et que le second dispositif embarqué est un dispositif embarqué qui prend en charge un protocole CAN, le premier message est un paquet Ethernet et le second message est un paquet CAN.

13. Passerelle embarquée (90) selon l'une quelconque des revendications 10 à 12, dans laquelle
le module de détermination (903) est spécifiquement configuré pour mettre en correspondance, en recherchant si les informations d'identification prédéfinies stockées dans la passerelle embarquée comprennent les informations d'identification du premier message, les informations d'identification du premier message avec les informations d'identification prédéfinies stockées dans la passerelle embarquée, dans laquelle la passerelle embarquée stocke au moins un élément des informations d'identification prédéfinies.

14. Passerelle embarquée (90) selon la revendication 10, dans laquelle la passerelle embarquée (90) stocke une première relation de mappage, et la première relation de mappage est une relation de mappage entre les informations d'identification prédéfinies et des informations de construction de message ; et
le module de construction de message (904) est en outre configuré pour : si la mise en correspondance des informations d'identification dans le premier message avec les informations d'identification prédéfinies stockées dans la passerelle embarquée (90) réussit,
obtenir des informations de construction de message correspondantes sur la base des informations d'identification prédéfinies ayant fait l'objet d'une correspondance réussie ; et
générer le second message à l'aide des informations de construction de message.

15. Véhicule intelligent (110), comprenant un premier dispositif embarqué (1101), un second dispositif embarqué (1103) et une passerelle embarquée (1102), dans lequel
le premier dispositif embarqué (1101) est configuré pour envoyer un premier message à la passerelle embarquée (1102), dans lequel le premier message satisfait à un premier protocole de communication pris en charge par le premier dispositif embarqué (1101), est utilisé pour indiquer un second dispositif embarqué (1103) pour effectuer une opération cible, et comprend des informations d'identification ;
la passerelle embarquée (1102) est configurée pour : recevoir le premier message à partir du premier dispositif embarqué (1101), et identifier les informations d'identification dans le premier message ; et
la passerelle embarquée (1102) est en outre configurée pour mettre en correspondre les informations d'identification dans le premier message avec des informations d'identification prédéfinies stockées dans la passerelle embarquée (1102) ; et si la mise en correspondance réussit, envoyer un second message, dans lequel le second message est utilisé pour indiquer au second dispositif embarqué (1103) d'effectuer une opération cible, est généré sur la base du premier message et satisfait à un second protocole de communication pris en charge par le second dispositif embarqué (1103) et le premier protocole de communication est différent du second protocole de communication.

16. Véhicule intelligent (110) selon la revendication 15, dans lequel
si le premier dispositif embarqué (1101) est un dispositif embarqué qui prend en charge un protocole CAN et que le second dispositif embarqué (1103) est un dispositif embarqué qui prend en charge un protocole Ethernet, le premier message est un paquet CAN et le second message est un paquet Ethernet.

17. Véhicule intelligent (1101) selon la revendication 15, dans lequel
si le premier dispositif embarqué (1101) est un dispositif embarqué qui prend en charge un protocole Ethernet et que le second dispositif embarqué (1103) est un dispositif embarqué qui prend en charge un protocole CAN, le premier message est un paquet Ethernet et le second message est un paquet CAN.

18. Véhicule intelligent (110) selon l'une quelconque des revendications 15 à 17, dans lequel la passerelle embarquée (1102) est spécifiquement configurée pour :
mettre en correspondance, en recherchant si les informations d'identification prédéfinies stockées dans la passerelle comprennent les informations d'identification du premier message, des informations d'identification du premier message avec les informations d'identification prédéfinies stockées dans la passerelle, dans lequel la passerelle (1102) stocke au moins un élément des informations d'identification prédéfinies.

19. Véhicule intelligent (110) selon la revendication 15, dans lequel la passerelle embarquée (1102) stocke une première relation de mappage, et la première relation de mappage est une relation de mappage entre les informations d'identification prédéfinies et des informations de construction de message ; et
la passerelle embarquée (1102) est spécifiquement configurée pour : si la mise en correspondance des informations d'identification dans le premier message avec les informations d'identification prédéfinies stockées dans la passerelle embarquée (1102) réussit, obtenir des informations de construction de message correspondantes en fonction des informations d'identification prédéfinies ayant fait l'objet d'une correspondance réussie ; et générer le second message à l'aide des informations de construction de message.
